# EUROPEAN PATENT APPLICATION

(11) **EP 4 683 379 A1**
(43) Date of publication of application: **21.01.2026**
(21) Application number: 24818810.4
(22) Date of filing: 07.06.2024
(51) Int. Cl.: H04W 28/06

(54) **DATA TRANSMISSION METHOD, DEVICE, AND STORAGE MEDIUM**

(30) Priority: 09.06.2023 CN 202310688910
(71) Applicant: Honor Device Co., Ltd., Shenzhen, Guangdong 518040 (CN)
(72) Inventor: LI, Haibo, Shenzhen, Guangdong 518040 (CN)
(74) Representative: MERH-IP Matias Erny Reichl Hoffmann Patentanwälte PartG mbB
(86) International application number: PCT/CN2024/098275
(87) International publication number: WO 2024/251284

(57) **Abstract**

This application provides a data transmission method, a device, and a storage medium, and relates to the field of communication technologies. In this solution, after a terminal device receives a PDCP discard timer duration configured by a network device for a voice data radio bearer, the terminal device may configure a relatively short PDCP discard timer duration for a silent frame and a relatively long PDCP discard timer duration for a voice frame through QCI/5QI-based table lookup. Compared with the silent frame, the voice frame carries more useful information. Therefore, after the silent frame expires, the silent frame is discarded to release a channel resource, so that the voice frame located after the silent frame can be smoothly transmitted, to effectively meet requirements of different service types for the PDCP discard timer duration and improve user experience.

## Description

This application claims priority to Chinese Patent Application No. 202310688910.2, filed with the China National Intellectual Property Administration on June 9, 2023 and entitled "DATA TRANSMISSION METHOD, DEVICE, AND STORAGE MEDIUM", which is incorporated herein by reference in its entirety.

### TECHNICAL FIELD

This application relates to the field of communication technologies, and in particular, to a data transmission method, a device, and a storage medium.

### BACKGROUND

Usually, data is cached in a queue form at a packet data convergence protocol (packet data convergence protocol, PDCP) layer. To prevent cache overflow, a discard timer (discard timer) is configured at the PDCP layer. Each time the PDCP layer receives a new PDCP service data unit (service data unit, SDU), the PDCP layer starts a discard timer for the PDCP SDU. If the discard timer expires or a PDCP status report indicates that the PDCP SDU is successfully sent, the PDCP SDU and a PDCP protocol data unit (protocol data unit, PDU) associated with the PDCP SDU are discarded, to release an occupied channel resource.

Currently, PDCP discard timer duration is specified by a network device by using a radio resource control (radio resource control, RRC) reconfiguration message. However, in some cases, the PDCP discard timer duration specified in the RRC reconfiguration message may not be proper. If a terminal device defines maximum cache duration of a data packet at the PDCP layer based on a configuration from the network device, a problem such as lag or one-way audio may occur, degrading user experience.

### SUMMARY

This application provides a data transmission method, a device, and a storage medium, to resolve a technical problem that PDCP discard timer duration configured by a network device for a data radio bearer is improper.

To achieve the foregoing objective, the following technical solutions are used in this application.

According to a first aspect, an embodiment of this application provides a data transmission method. The method is applied to a first terminal device. The method may include:
receiving an RRC message sent by a network device, where the RRC message may include first duration information, and the first duration information may include information that a PDCP discard timer duration corresponding to a first data radio bearer is a first duration;
obtaining a first data frame corresponding to the first data radio bearer; not sending the first data frame to a second terminal device within a second duration starting from obtaining of the first data frame; and not sending the first data frame to the second terminal device after the second duration starting from obtaining of the first data frame, where the second duration is different from the first duration; and
obtaining a second data frame corresponding to the first data radio bearer; and sending the second data frame to the second terminal device within the second duration starting from obtaining of the second data frame.

In the foregoing solution, the network device configures a PDCP discard timer duration, that is, the first duration, for the first data radio bearer. When the first duration configured by the network device is excessively long or excessively short, the terminal device may reconfigure a more appropriate duration for the first data radio bearer. The terminal device dynamically adjusts the PDCP discard timer duration, to effectively meet requirements of various service types and use scenarios.

In an optional implementation, the first data frame and the second data frame may carry a first identifier.

In an optional implementation, after the receiving an RRC message sent by a network device, the method may further include: obtaining a third data frame corresponding to the first data radio bearer; not sending the third data frame to the second terminal device within a third duration starting from obtaining of the third data frame; and not sending the third data frame to the second terminal device after the third duration starting from obtaining of the third data frame, where the third duration is different from the first duration; and obtaining a fourth data frame corresponding to the first data radio bearer; and sending the fourth data frame to the second terminal device within the third duration starting from obtaining of the fourth data frame, where the first data frame and the fourth data frame carry a second identifier, and the first identifier and the second identifier indicate different types of data frames.

In the foregoing solution, the network device configures the first duration for the first data radio bearer, and the duration is applicable to data of all service types of the first data radio bearer. Actually, data of different service types may have different requirements for the PDCP discard timer duration. For example, for some service types corresponding to the first data radio bearer, the first duration may be excessively long; and for some other service types corresponding to the first data radio bearer, the first duration may be excessively short. The terminal device may configure different PDCP discard timer durations for different service types of a same data radio bearer. In this way, after the terminal device obtains data of different service types of the same data radio bearer, the terminal device may respectively start timers with different durations for data of the service types, to effectively meet requirements of various service types/use scenarios.

In an optional implementation, the first data radio bearer is a voice data radio bearer, the first identifier is used to indicate a voice frame, and the second identifier is used to indicate a silent frame; and the second duration is greater than the first duration, and the third duration is less than the first duration. For example, the first duration is 300 ms, the second duration is 500 ms, and the third duration is 100 ms.

In the foregoing solution, the voice data radio bearer is used to transmit voice data. The network device configures the first duration for the voice data radio bearer, and the duration is applicable to all types of voice data. However, different types of voice data have different requirements for the PDCP discard timer duration. After obtaining the voice frame and the silent frame, the first terminal device may start PDCP discard timers with different durations. Compared with the silent frame, the voice frame carries more useful information. Therefore, a duration (that is, the third duration) of a PDCP discard timer started for the silent frame is relatively short, and a duration (that is, the second duration) of a PDCP discard timer started for the voice frame is relatively long. After the silent frame in a data queue expires, the silent frame is discarded to release a channel resource, so that the voice frame located after the silent frame can be smoothly transmitted, to effectively meet requirements of different voice types for the PDCP discard timer duration and improve call experience of a user.

In an optional implementation, the first data radio bearer is an internet access data radio bearer, the first identifier is used to indicate a TCP frame, and the second identifier is used to indicate a UDP frame; and the second duration is greater than or less than the first duration, and the second duration is greater than the third duration. For example, the first duration is 1500 ms, the second duration is 1000 ms, and the third duration is 750 ms.

In the foregoing solution, the network device configures the first duration for the internet access data radio bearer, and the duration is applicable to all types of internet access data. However, different types of internet access data have different requirements for the PDCP discard timer duration. After obtaining the TCP and the UDP, the terminal device may start PDCP discard timers with different durations. Compared with the TCP, the UDP requires a lower delay. Therefore, a duration of a PDCP discard timer started for the UDP is relatively short, and a duration of a PDCP discard timer started for the TCP is relatively long, to meet requirements of the TCP and the UDP for the PDCP discard timer duration and effectively improve internet access experience of a user.

In an optional implementation, both the voice frame and the silent frame are sent at a PDCP layer of the first terminal device. Data that is transferred from an upper layer (for example, a TCP/UDP/IP layer) to the PDCP layer and that is not processed at the PDCP layer is referred to as a PDCP SDU. Data that is processed at the PDCP layer in a specific format and then transferred to a lower layer (for example, an RLC layer) is referred to as a PDCP PDU. The silent frame carries the second identifier used to indicate the silent frame, and the voice frame carries the first identifier used to indicate the voice frame. It should be noted that the terminal device may obtain a first time from a log of the PDCP SDU. The first time is a time at which the PDCP SDU is obtained through encapsulation at the upper layer of the PDCP layer. The terminal device may further obtain a second time from a log of the PDCP PDU. The second time is a time at which the PDCP PDU is obtained through encapsulation at the PDCP layer.

In an optional implementation, the not sending the first data frame to the second terminal device after the second duration starting from obtaining of the first data frame may include: performing timing starting from obtaining of the first data frame; and not sending the first data frame to the second terminal device based on a timing duration reaching the second duration, and stopping timing.

For example, the first data frame is a first PDCP SDU. Starting from obtaining of the first PDCP SDU, the PDCP layer starts a first PDCP discard timer based on the first identifier carried in the first PDCP SDU. When the timing duration of the first PDCP discard timer reaches the second duration, the PDCP layer discards the first PDCP SDU and a first PDCP PDU, and stops timing of the first PDCP discard timer.

In an optional implementation, the sending the second data frame to the second terminal device within the second duration starting from obtaining of the second data frame may include: performing timing starting from obtaining of the second data frame; and sending the second data frame to the second terminal device within the second duration, and stopping timing.

For example, the second data frame is a second PDCP SDU. Starting from obtaining of the second PDCP SDU, the PDCP layer starts a first PDCP discard timer based on the first identifier carried in the second PDCP SDU. If a second PDCP PDU is successfully sent to the second terminal device before a second PDCP discard timer expires, timing of the first PDCP discard timer is stopped.

In the foregoing solution, although the duration of the PDCP discard timer started for the voice frame is relatively long, in a special case such as network congestion, the voice frame may not be sent within the third duration. After the PDCP discard timer of the voice frame expires, the voice frame is discarded to release a channel resource occupied by the voice frame, so that another voice frame located after the voice frame can be smoothly transmitted.

In an optional implementation, the not sending the third data frame to the second terminal device after the third duration starting from obtaining of the third data frame may include: performing timing starting from obtaining of the third data frame; and not sending the third data frame to the second terminal device based on a timing duration reaching the third duration, and stopping timing.

For example, the third data frame is a third PDCP SDU. Starting from obtaining of the third PDCP SDU, the PDCP layer starts a second PDCP discard timer based on the second identifier carried in the third PDCP SDU. When the timing duration of the second PDCP discard timer reaches the third duration, the PDCP layer discards the third PDCP SDU and a third PDCP PDU, and stops timing of the second PDCP discard timer.

In an optional implementation, the sending the fourth data frame to the second terminal device within the third duration starting from obtaining of the fourth data frame may include: performing timing starting from obtaining of the fourth data frame; and sending the fourth data frame to the second terminal device within the second duration, and stopping timing.

For example, the fourth data frame is a fourth PDCP SDU. Starting from obtaining of the fourth PDCP SDU, the PDCP layer starts a second PDCP discard timer based on the second identifier carried in the fourth PDCP SDU. If a fourth PDCP PDU is successfully sent to the second terminal device before the second PDCP discard timer expires, timing of the second PDCP discard timer is stopped.

In the foregoing solution, although the duration of the PDCP discard timer started for the silent frame is relatively short, when a network status is relatively good, the silent frame may be successfully sent within the second duration.

In an optional implementation, both the silent frame and the voice frame carry numbers. The number may also be referred to as a frame number or a sequence number. For example, a first silent frame carries a first number, a first voice frame carries a second number, a second silent frame carries a third number, and a second voice frame carries a fourth number. The terminal device assigns numbers to frames, and the frames are transferred between layers based on the numbers. The terminal device can distinguish between frames based on numbers of the frames, types of the frames, a sending/receiving sequence of the frames, and the like.

In an optional implementation, lengths of a same frame before and after encapsulation at the PDCP layer are equal or correspond to each other. For example, lengths of the first silent frame before and after encapsulation at the PDCP layer are a first length, and lengths of the first voice frame before and after encapsulation at the PDCP layer are a second length. For another example, a length of the first silent frame before encapsulation at the PDCP layer is a first length, a length of the first silent frame after encapsulation at the PDCP layer is a third length, and a difference between the third length and the first length is N bytes; and a length of the first voice frame before encapsulation at the PDCP layer is a second length, a length of the first voice frame after encapsulation at the PDCP layer is a fourth length, and a difference between the fourth length and the second length is N bytes. The second length is greater than the first length, and the fourth length is greater than the third length. Because lengths of frames are not equal, the terminal device can distinguish between the frames based on the lengths of the frames.

In an optional implementation, when the first data radio bearer is a voice data radio bearer, the first identifier is used to indicate a voice frame, and the second identifier is used to indicate a silent frame, after the receiving an RRC message sent by a network device, the method may further include: looking up a preset relationship table to obtain the third duration corresponding to the silent frame of the voice data radio bearer and the second duration corresponding to the voice frame of the voice data radio bearer; determining that the second duration is greater than the first duration; and configuring the third duration as a PDCP discard timer duration corresponding to the silent frame of the voice data radio bearer, and configuring the second duration as a PDCP discard timer duration corresponding to the voice frame of the voice data radio bearer. The preset relationship table is prestored before the terminal device is delivered from a factory, or may be obtained by the terminal device from a server in a use process.

In the foregoing solution, the PDCP discard timer duration that corresponds to the voice data radio bearer and that is configured by the network device may be improper. Therefore, the terminal device may look up the table to obtain the durations respectively preconfigured for the silent frame and the voice frame, and then compare the duration of the voice frame with the duration configured by the network device, to determine whether to override a PDCP discard timer duration corresponding to a first service type. The silent frame may be directly configured based on a table lookup result. In an example, when the duration of the voice frame is greater than the duration configured by the network device, the terminal device defines the PDCP discard timer duration corresponding to the voice frame based on the duration of the voice frame obtained by looking up the table; or when the duration of the voice frame is less than or equal to the duration configured by the network device, the terminal device defines the PDCP discard timer duration corresponding to the voice frame based on the configuration from the network device. In another example, when the duration of the voice frame is less than the duration configured by the network device, the terminal device defines the PDCP discard timer duration corresponding to the voice frame based on the duration of the voice frame obtained by looking up the table; or when the duration of the voice frame is greater than or equal to the duration configured by the network device, the terminal device defines the PDCP discard timer duration corresponding to the voice frame based on the configuration from the network device. It should be understood that regardless of which of the configuration manners is used, because the terminal device respectively configures the PDCP discard timer durations for the voice frame and the silent frame, different requirements of the voice frame and the silent frame are met.

In an optional implementation, after the receiving an RRC message sent by a network device, and before the obtaining a voice frame and a silent frame, the method may further include: receiving a first INVITE message sent by the second terminal device; and receiving an answer operation of a user.

In an optional implementation, the first duration information may further include information that a PDCP discard timer duration corresponding to an IMS data radio bearer is a fourth duration; and after the receiving the answer operation of a user, and before the obtaining a voice frame and a silent frame, the method may further include: receiving a second INVITE message sent by the network device; obtaining a 200 OK message returned for the second INVITE message; not sending the 200 OK message within the fourth duration starting from obtaining of the 200 OK message; and sending the 200 OK message to the network device within a fifth duration starting from obtaining of the 200 OK message, where the fifth duration is greater than the fourth duration.

The second INVITE message may also be referred to as a Reinvite message, and the Reinvite message is a message resent for the first INVITE message. Different from the first INVITE message, the second INVITE message further includes a tag, and the tag may be used to distinguish between the first INVITE message and the second INVITE message. For example, a code segment of the second INVITE message is as follows:
"To:tel:***********3612;transport=udp;tag=1703227949", where "To" indicates a called device, that is, a terminal device 1, and "tag=1703227949" is the tag carried in the second INVITE message.

In the foregoing solution, a length of the 200 OK message is usually relatively long, for example, exceeds 1500 bytes. When the PDCP discard timer duration configured by the network device is relatively short, the 200 OK message possibly cannot be successfully sent after the duration expires. Therefore, after obtaining the 200 OK message, the terminal device may start a longer PDCP discard timer. Because sufficient time is reserved for the 200 OK message, the 200 OK message can be successfully sent before the timer expires.

In an optional implementation, after the receiving an RRC message sent by a network device, and before the receiving a first INVITE message, the method may further include: looking up a preset relationship table to obtain the fifth duration corresponding to the IMS data radio bearer; determining that the fifth duration is greater than the fourth duration; and configuring the fifth duration as a PDCP discard timer duration corresponding to the IMS data radio bearer.

For example, the fourth duration is 100 ms, and the fifth duration is 3000 ms or 4000 ms.

In the foregoing solution, after receiving the PDCP discard timer duration configured by the network device, the terminal device may first look up the table to obtain the fifth duration corresponding to IMS signaling, and then select a larger value from the PDCP discard timer duration configured by the network device and the duration obtained by looking up the table, to define the PDCP discard timer corresponding to the IMS signaling. In this way, sufficient time is reserved for the IMS signaling (for example, the 200 OK message), and therefore the IMS signaling can be successfully sent before the timer expires.

In an optional implementation, when the first data radio bearer is an internet access data radio bearer, the first identifier is used to indicate a TCP frame, and the second identifier is used to indicate a UDP frame, after the receiving an RRC message sent by a network device, the method may further include:
looking up a preset relationship table to obtain the second duration corresponding to the TCP frame of the internet access data radio bearer and the third duration corresponding to the UDP frame of the internet access data radio bearer; and
determining that the second duration is less than the first duration, configuring the second duration as a PDCP discard timer duration corresponding to the TCP frame of the internet access data radio bearer, and configuring the third duration as a PDCP discard timer duration corresponding to the UDP frame of the internet access data radio bearer; or
determining that the second duration is greater than or equal to the first duration, configuring the second duration as a PDCP discard timer duration corresponding to the TCP frame of the internet access data radio bearer, and configuring the third duration as a PDCP discard timer duration corresponding to the UDP frame of the internet access data radio bearer; or
determining that the second duration is not equal to the first duration, configuring the second duration as a PDCP discard timer duration corresponding to the TCP frame of the internet access data radio bearer, and configuring the third duration as a PDCP discard timer duration corresponding to the UDP frame of the internet access data radio bearer.

In the foregoing solution, the network device configures a duration for the internet access data radio bearer, and the duration is applicable to all types of internet access data. However, different types of internet access data have different requirements for the PDCP discard timer duration. The terminal device may look up the table to obtain the durations respectively preconfigured for the TCP and the UDP, and then compare the duration of the TCP with the duration configured by the network device, to determine whether to override the PDCP discard timer duration corresponding to the TCP. The UDP may be directly configured based on a table lookup result. Regardless of which of the foregoing configuration manners is used, because the terminal device respectively configures the PDCP discard timer durations for the TCP and the UDP, different requirements of the TCP and the UDP are met.

In an optional implementation, the first data radio bearer is a data radio bearer of a first quality of service class identifier QCI, or the first data radio bearer is a data radio bearer of a first 5G quality of service identifier 5QI. The QCI is an LTE PDN connection parameter, and the 5QI is an NR PDU session parameter. Different QCI/5QI values indicate different bearer types. For example, data radio bearers of QCI=1 and 5QI=1 are used to transmit voice data.

According to a second aspect, this application provides a method for adjusting a PDCP discard timer duration. The method includes:
receiving an RRC message sent by a network device, where the RRC message includes a PDCP discard timer duration corresponding to a first DRB; and configuring a PDCP discard timer duration corresponding to the first DRB based on a table lookup result of a quality of service identifier of the first DRB. Different PDCP discard timer durations are configured for DRBs of different quality of service identifiers. Different PDCP discard timer durations are configured for different service types of a same DRB. Different PDCP discard timer durations are configured for different use scenarios of a same service type of a same DRB.

For example, the quality of service identifier of the first DRB is a QCI or a 5QI.

In the foregoing solution for dynamically adjusting a PDCP discard timer duration, when the PDCP discard timer duration that is received by a terminal device and that is configured by the network device is excessively long or excessively short, the terminal device may configure different PDCP discard timer durations for DRBs of different QCIs/5QIs; configure different PDCP discard timer durations for different service types of a same DRB; and configure different PDCP discard timer durations for different use scenarios of a same service type. The terminal device dynamically adjusts the PDCP discard timer duration, to effectively meet requirements of various service types/use scenarios.

In an optional implementation, the first DRB is one DRB.

In an optional implementation, the first DRB is a plurality of DRBs. Each of the plurality of DRBs corresponds to one PDCP discard timer duration.

In the foregoing solution, a specific quantity of QCIs for DRBs whose PDCP discard timer durations are carried in one RRC reconfiguration message is determined by the network device. However, regardless of how the network device makes a configuration, the terminal device 1 may dynamically adjust a PDCP discard timer duration corresponding to a DRB of the QCI, that is, optimize the PDCP discard timer duration.

In an optional implementation, the table lookup result based on the quality of service identifier of the first DRB is one duration. The configuring a PDCP discard timer duration corresponding to the first DRB based on a table lookup result of a quality of service identifier of the first DRB includes: if the one duration meets a first override condition, overriding the PDCP discard timer duration corresponding to the first DRB based on the one duration, and configuring an overridden PDCP discard timer duration as the PDCP discard timer duration corresponding to the first DRB; or if the one duration does not meet a first override condition, configuring the PDCP discard timer duration from the network device as the PDCP discard timer duration corresponding to the first DRB.

In an optional implementation, the first override condition includes any one of the following: The PDCP discard timer duration from the network device is not equal to the one duration; the quality of service identifier of the first DRB belongs to a first category, and the one duration is greater than or equal to the PDCP discard timer duration from the network device; the quality of service identifier of the first DRB belongs to a second category, and the one duration is less than or equal to the PDCP discard timer duration from the network device; the PDCP discard timer duration corresponding to the first DRB from the network device is received; and the PDCP discard timer duration corresponding to the first DRB from the network device is received, and the quality of service identifier of the first DRB belongs to a third category.

In an optional implementation, the table lookup result based on the quality of service identifier of the first DRB includes a first duration and a second duration, the first duration is a PDCP discard timer duration corresponding to a first service type of the first DRB, and the second duration is a PDCP discard timer duration corresponding to a second service type of the first DRB. Correspondingly, the configuring a PDCP discard timer duration corresponding to the first DRB based on a table lookup result of a quality of service identifier of the first DRB includes: if the first duration meets a second override condition, configuring the first duration as the PDCP discard timer duration corresponding to the first service type, and configuring the second duration as the PDCP discard timer duration corresponding to the second service type; or if the first duration does not meet a second override condition, configuring the PDCP discard timer duration from the network device as the PDCP discard timer duration corresponding to the first service type, and configuring the second duration as the PDCP discard timer duration corresponding to the second service type.

In an optional implementation, the second override condition includes any one of the following: The PDCP discard timer duration from the network device is not equal to the first duration; the quality of service identifier of the first DRB belongs to a first category, and the first duration is greater than or equal to the PDCP discard timer duration from the network device; the quality of service identifier of the first DRB belongs to a second category, and the first duration is less than or equal to the PDCP discard timer duration from the network device; the PDCP discard timer duration corresponding to the first DRB from the network device is received; the PDCP discard timer duration corresponding to the first DRB from the network device is received, and the quality of service identifier of the first DRB belongs to a third category.

In an optional implementation, the table lookup result based on the quality of service identifier of the first DRB includes a third duration and a fourth duration, the third duration is a PDCP discard timer duration corresponding to a first use scenario of a third service type, the fourth duration is a PDCP discard timer duration corresponding to a second use scenario of the third service type, and the third service type is any service type of the first DRB. Correspondingly, the configuring a PDCP discard timer duration corresponding to the first DRB based on a table lookup result of a quality of service identifier of the first DRB includes: if the third duration meets a third override condition, configuring the third duration as the PDCP discard timer duration corresponding to the first use scenario, and configuring the fourth duration as the PDCP discard timer duration corresponding to the second use scenario; or if the third duration does not meet a third override condition, configuring the PDCP discard timer duration from the network device as the PDCP discard timer duration corresponding to the first use scenario, and configuring the fourth duration as the PDCP discard timer duration corresponding to the second use scenario.

In an optional implementation, the third override condition includes any one of the following: The PDCP discard timer duration from the network device is not equal to the third duration; the quality of service identifier of the first DRB belongs to a first category, and the third duration is greater than or equal to the PDCP discard timer duration from the network device; the quality of service identifier of the first DRB belongs to a second category, and the third duration is less than or equal to the PDCP discard timer duration from the network device; the PDCP discard timer duration corresponding to the first DRB from the network device is received; the PDCP discard timer duration corresponding to the first DRB from the network device is received, and the quality of service identifier of the first DRB belongs to a third category.

According to a third aspect, this application provides an apparatus. The apparatus includes a unit configured to perform the method in the first aspect or the second aspect. The apparatus may correspondingly perform the data transmission method described in the first aspect or the second aspect. For related descriptions of the unit in the apparatus, refer to the descriptions in the first aspect or the second aspect. For brevity, details are not described herein again.

The method described in the first aspect or the second aspect may be implemented by hardware, or may be implemented by executing corresponding software by hardware. The hardware or the software includes one or more modules or units corresponding to the foregoing function, for example, a processing module or unit or a display module or unit.

According to a fourth aspect, this application provides a terminal device. The terminal device includes a memory and one or more processors. The memory is configured to store computer program code. The computer program code includes computer instructions. When the computer instructions are executed by the processor, the terminal device is enabled to perform the data transmission method provided in any one of the first aspect or the second aspect.

According to a fifth aspect, this application provides a computer-readable storage medium. The computer-readable storage medium includes computer instructions. When the computer instructions are run on a terminal device, the terminal device is enabled to perform the data transmission method provided in any one of the first aspect or the second aspect.

According to a sixth aspect, this application provides a computer program product. When the computer program product is run on a computer, the computer is enabled to perform the data transmission method provided in any one of the first aspect or the second aspect.

According to a seventh aspect, this application provides a chip system. The chip system includes one or more interface circuits and one or more processors. The interface circuit and the processor are connected through a line. The chip system may be applied to a terminal device that includes a communication module and a memory. The interface circuit is configured to receive a signal from the memory of the electronic device, and send the signal to the processor, where the signal includes computer instructions stored in the memory. When the processor executes the computer instructions, the terminal device may perform the data transmission method provided in any one of the first aspect or the second aspect.

It may be understood that for beneficial effects that can be achieved by the apparatus according to the third aspect, the terminal device according to the fourth aspect, the computer-readable storage medium according to the fifth aspect, the computer program product according to the sixth aspect, and the chip system according to the seventh aspect provided above, refer to the beneficial effects in any one of the first aspect or the second aspect. Details are not described herein again.

### BRIEF DESCRIPTION OF DRAWINGS

FIG. 1 is a schematic flowchart of a PDCP data discarding method according to an embodiment of this application;
FIG. 2 is a schematic diagram of comparison between VoLTE call completion rates before and after a network device performs optimization and compatibility on a PDCP discard timer duration of a QCI5 service according to an embodiment of this application;
FIG. 3 is a schematic diagram of comparison between PTP jitter and packet loss rates before and after a network device performs optimization and compatibility on a PDCP discard timer duration of a QCI5 service according to an embodiment of this application;
FIG. 4 is a schematic diagram of comparison between percentages of MOS values greater than or equal to 3.0 and average MOS values before and after a network device performs optimization and compatibility on a PDCP discard timer duration of a QCI5 service according to an embodiment of this application;
FIG. 5A and FIG. 5B are a flowchart of a scenario example in which service abnormality occurs due to an improper PDCP discard timer duration configured by a network device according to an embodiment of this application;
FIG. 6 is a schematic diagram of a communication system according to an embodiment of this application;
FIG. 7 is a schematic diagram of a structure of a terminal device according to an embodiment of this application;
FIG. 8 is a schematic flowchart of a method for dynamically adjusting a PDCP discard timer duration according to an embodiment of this application;
FIG. 9A is a schematic diagram 1 of configuring a PDCP discard timer duration according to an embodiment of this application;
FIG. 9B is a schematic diagram 2 of configuring a PDCP discard timer duration according to an embodiment of this application;
FIG. 10A is a schematic diagram 3 of configuring a PDCP discard timer duration according to an embodiment of this application;
FIG. 10B is a schematic diagram 4 of configuring a PDCP discard timer duration according to an embodiment of this application;
FIG. 11A is a schematic diagram 5 of configuring a PDCP discard timer duration according to an embodiment of this application;
FIG. 11B is a schematic diagram 6 of configuring a PDCP discard timer duration according to an embodiment of this application;
FIG. 12A is a schematic diagram 7 of configuring a PDCP discard timer duration according to an embodiment of this application;
FIG. 12B is a schematic diagram 8 of configuring a PDCP discard timer duration according to an embodiment of this application;
FIG. 13A is a schematic diagram 9 of configuring a PDCP discard timer duration according to an embodiment of this application;
FIG. 13B is a schematic diagram 10 of configuring a PDCP discard timer duration according to an embodiment of this application;
FIG. 14 is a schematic flowchart of another method for dynamically adjusting a PDCP discard timer duration according to an embodiment of this application;
FIG. 15A, FIG. 15B, and FIG. 15C are a flowchart of data transmission in a VoLTE voice service scenario according to an embodiment of this application;
FIG. 16 is a flowchart of data transmission in an internet access scenario according to an embodiment of this application; and
FIG. 17 is a schematic diagram of a hardware structure of a communication apparatus according to an embodiment of this application.

### DESCRIPTION OF EMBODIMENTS

To make the objectives, technical solutions, and advantages of embodiments of this application clearer, the following clearly and completely describes the technical solutions in embodiments of this application with reference to the accompanying drawings in embodiments of this application. Clearly, the described embodiments are some rather than all of embodiments of this application.

In the descriptions of this application, unless otherwise specified, "/" means "or". For example, A/B may represent A or B. In the descriptions of this application, the term "and/or" is merely used to describe an association relationship between associated objects, and represents that three relationships may exist. For example, A and/or B may represent the following three cases: Only A exists, both A and B exist, and only B exists.

In the specification and the claims of this application, the terms "first", "second", and the like are intended to distinguish between different objects or distinguish between different processing on a same object, and are not used to describe a specific sequence of the objects. For example, a first duration and a second duration are used to distinguish between different durations, and are not used to describe a specific sequence of the durations. In the embodiments of this application, "a plurality of" means two or more.

Referring to "one embodiment", "some embodiments", or the like that is described in this specification of this application means that specific features, structures, or characteristics described with reference to one or more embodiments are included in the one or more embodiments of this application. Therefore, statements such as "in one embodiment", "in some embodiments", "in some other embodiments" that appear in different parts of this specification do not necessarily refer to same embodiments, but mean "one or more but not all embodiments", unless otherwise specifically emphasized in other manners. The terms "include", "comprise", and "have", and variants thereof all mean "include but are not limited to", unless otherwise specially emphasized in other manners.

To facilitate understanding of the embodiments of this application, a PDCP discard timer is explained and described below.

A layer 2 (L2) of a modem (modem) sequentially includes a PDCP layer, a radio link control (radio link control, RLC) layer, and a media access control (media access control, MAC) layer from top to bottom. Each data packet is cached in a queue form. After a channel resource is allocated to a data packet, the data packet is sequentially sent through the PDCP layer, the RLC layer, the MAC layer, and the like.

To prevent cache overflow, a discard mechanism is provided in a related protocol: Each time the PDCP layer receives a new data packet, a discard timer corresponding to the data packet is started. Timing is performed by using the discard timer, and it is monitored whether the data packet can be submitted from the PDCP layer to the RLC layer and then to the MAC layer and finally sent within a specified time. If the data packet is not sent within the specified time, the data packet is cleared from a transmission queue, that is, the data packet is discarded, to avoid excessive occupation of channel resources by the data packet.

Usually, a PDCP entity has only one timer, that is, a PDCP discard timer. The PDCP timer determines a maximum time that a PDCP SDU is allowed to remain at the PDCP layer. Each time the PDCP layer receives a new PDCP SDU, the PDCP layer starts a PDCP discard timer for each PDCP SDU. If the PDCP discard timer expires or a PDCP status report indicates that the PDCP SDU is successfully sent, the PDCP layer discards the PDCP SDU and a PDCP PDU associated with the PDCP SDU. In some cases, if the PDCP SDU is submitted to a lower layer, the PDCP layer sends a message indicating to discard the PDCP PDU to the lower layer.

Currently, a PDCP discard timer is configured for each of a network device and a terminal device. A PDCP discard timer duration is usually a fixed value configured by a manufacturer before a base station is delivered from a factory. The network device may specify the PDCP discard timer duration to the terminal device by using an RRC reconfiguration message. According to a protocol, the terminal device needs to define a maximum cache duration of a data packet at the PDCP layer based on a configuration from the network device.

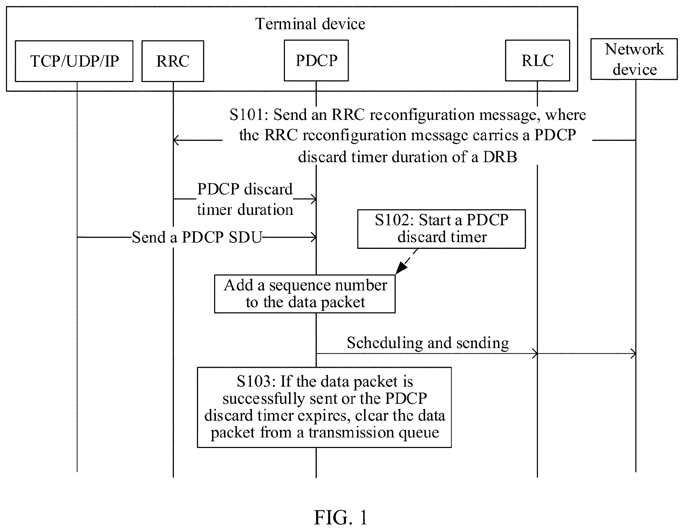

For example, FIG. 1 is a schematic flowchart of a PDCP data discarding method. As shown in FIG. 1, the method may include S101-S103.

S101: A network device sends an RRC reconfiguration message to a terminal device.

The network device may send the RRC reconfiguration message to an RRC layer of the terminal device. The RRC reconfiguration message carries a PDCP discard timer duration of a data radio bearer (data radio bearer, DRB). The PDCP discard timer duration of the DRB may be a fixed value configured before a base station is delivered from a factory. For example, the PDCP discard timer duration may be 50 ms, 100 ms, 150 ms, 300 ms, 500 ms, 750 ms, 1500 ms, or infinity (infinity) specified in a protocol.

S102: After obtaining a data packet corresponding to the DRB, the terminal device starts a PDCP discard timer (that is, starts timing). An encapsulation format of the data packet is a PDCP SDU.

It should be noted that data that is transferred from an upper layer (for example, a TCP/UDP/IP layer) to a PDCP layer and that is not processed at the PDCP layer is referred to as a PDCP SDU. Data that is processed at the PDCP layer in a specific format and then transferred to a lower layer (for example, an RLC layer) is referred to as a PDCP PDU.

After the RRC layer of the terminal device obtains the PDCP discard timer duration corresponding to the DRB from the RRC reconfiguration message, the RRC layer of the terminal device sends the PDCP discard timer duration to the PDCP layer of the terminal device. Correspondingly, the PDCP layer of the terminal device stores the PDCP discard timer duration. When obtaining a PDCP SDU corresponding to the DRB through encapsulation based on a TCP/UDP/IP protocol, the terminal device sends the PDCP SDU to the PDCP layer of the terminal device. The PDCP layer of the terminal device receives the PDCP SDU, and starts the PDCP discard timer corresponding to the DRB, that is, starts timing of the PDCP discard timer.

S103: If the data packet is successfully sent or the PDCP discard timer expires, clear the data packet from a transmission queue, that is, discard the data packet, and stop the PDCP discard timer (that is, stop timing).

That the PDCP discard timer expires means that a timing duration of the PDCP discard timer reaches a PDCP discard timer duration configured by the network device for the DRB.

In some embodiments, after the PDCP discard timer is started, and the PDCP discard timer does not expire, if the PDCP layer of the terminal device obtains an event (event) notification indicating that the data packet is successfully sent, the PDCP layer clears the data packet from the transmission queue, and stops the PDCP discard timer.

In some other embodiments, if the PDCP layer of the terminal device receives an expiration notification of the timer, the PDCP layer clears the data packet from the transmission queue, and stops the PDCP discard timer.

For example, if the PDCP discard timer expires, the PDCP layer of the terminal device detects whether a PDCP PDU associated with the PDCP SDU is submitted to a lower layer (for example, the RLC layer and a MAC layer). If the PDCP PDU associated with the PDCP SDU is not submitted to the lower layer, the PDCP layer of the terminal device discards the PDCP SDU and the PDCP PDU associated with the PDCP SDU. If the PDCP PDU associated with the PDCP SDU is submitted to the lower layer, the terminal device sends a message indicating to discard the PDCP PDU to the lower layer.

It should be noted that in FIG. 1, an example in which the PDCP layer sends a message indicating to discard the PDCP PDU to the RLC layer is used for description. This constitutes no limitation on this application. In actual implementation, if the PDCP PDU is already transferred to the MAC layer, the PDCP layer sends a message indicating to discard the PDCP PDU to the MAC layer.

However, it may not be proper to use the fixed value configured before the base station is delivered from the factory as the PDCP discard timer duration. To resolve a problem that service abnormality occurs due to an improper PDCP discard timer duration, a solution in which the network device performs optimization and compatibility on the PDCP discard timer duration is provided in a related technology.

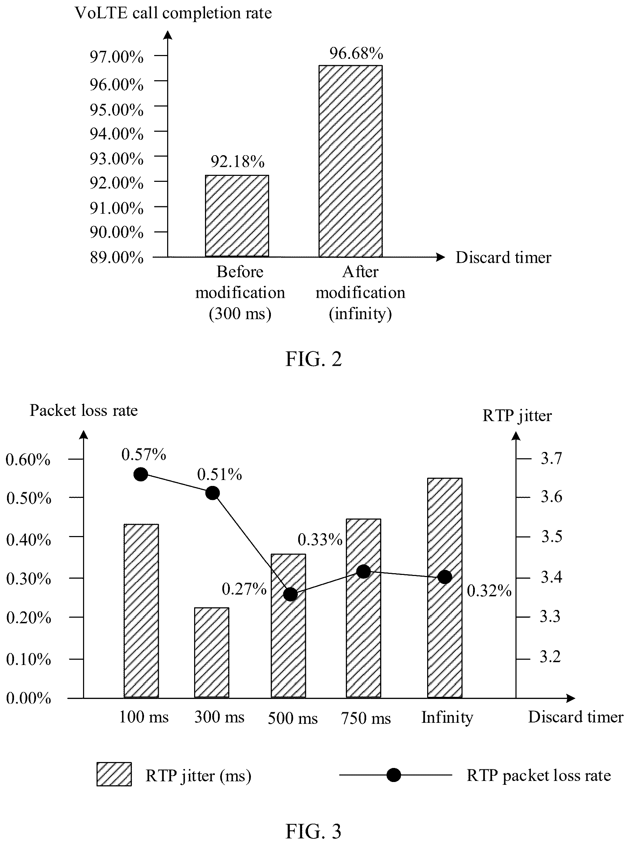

For example, an IP multimedia subsystem (IP multimedia subsystem, IMS)-based call scenario is used as an example. FIG. 2-FIG. 4 are schematic diagrams of comparison of parameters before and after a network device performs optimization and compatibility on a PDCP discard timer duration corresponding to a DRB of QCI5 (that is, QCI=5).

As shown in FIG. 2, before the PDCP discard timer duration is modified, the PDCP discard timer duration is 300 ms (milliseconds), and a voice over long-term evolution (voice over long-term evolution, VoLTE) call completion rate is 92.18%. After the PDCP discard timer duration is modified, the PDCP discard timer duration is infinity, and the VoLTE call completion rate is 96.68%. It may be learned that after the PDCP discard timer duration is modified from 300 ms to infinity, the VoLTE call completion rate is significantly increased.

As shown in FIG. 3, when the PDCP discard timer duration is gradually increased, real time protocol (real time protocol, PTP) jitter is first decreased and then increased, and a PTP packet loss rate is slightly decreased. When the PDCP discard timer duration is set to 300 ms, a PTP jitter value is smallest.

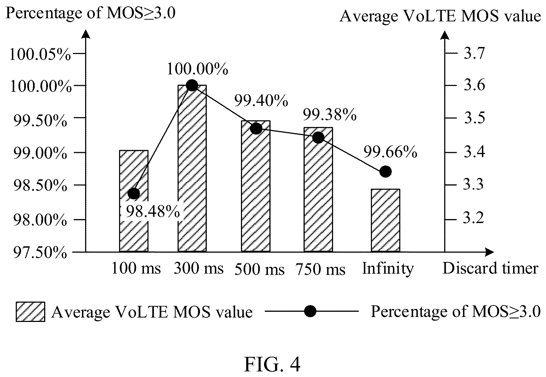

As shown in FIG. 4, when the PDCP discard timer duration is gradually increased, a percentage of mean opinion score (mean opinion score, MOS) values greater than or equal to 3.0 is first increased and then decreased, and an average VoLTE MOS value is first increased and then decreased. When the PDCP discard timer duration is set to 300 ms, the percentage of MOS values greater than or equal to 3.0 is highest, and the average VoLTE MOS value is largest.

It may be learned from the descriptions in the foregoing embodiment that when the PDCP discard timer duration is adjusted, the VoLTE call completion rate, the PTP jitter, the PTP packet loss rate, the MOS value, and the average VoLTE MOS value are adjusted accordingly.

However, due to impact of various factors such as a service type, a quantity of users using a service, a location at which the service is used, and a time when the service is used, a PDCP discard timer duration reconfigured by the network device may also be improper. The IMS-based call scenario is still used as an example. When the PDCP discard timer duration specified in the RRC reconfiguration message is excessively short, a data packet may be discarded quickly, and consequently a receive end cannot receive a complete data packet. For another example, when the PDCP discard timer duration specified in the RRC reconfiguration message is excessively long, a call delay and lag may occur, and a receive end may need to wait for a relatively long time to receive a voice data packet. In addition, if a channel resource occupied by the data packet cannot be released, normal transmission of another data packet is affected.

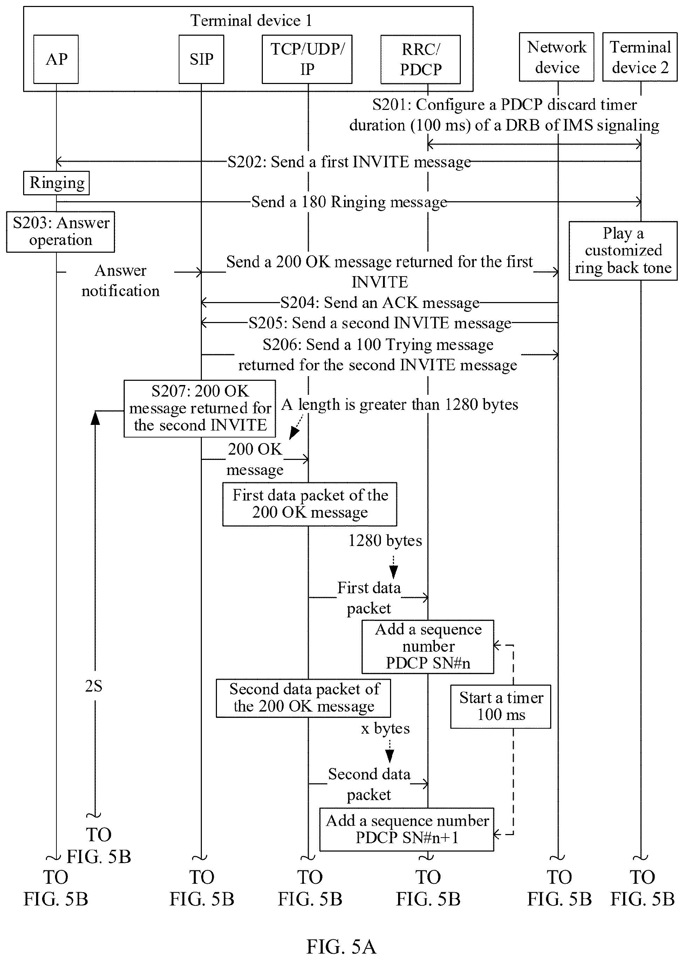

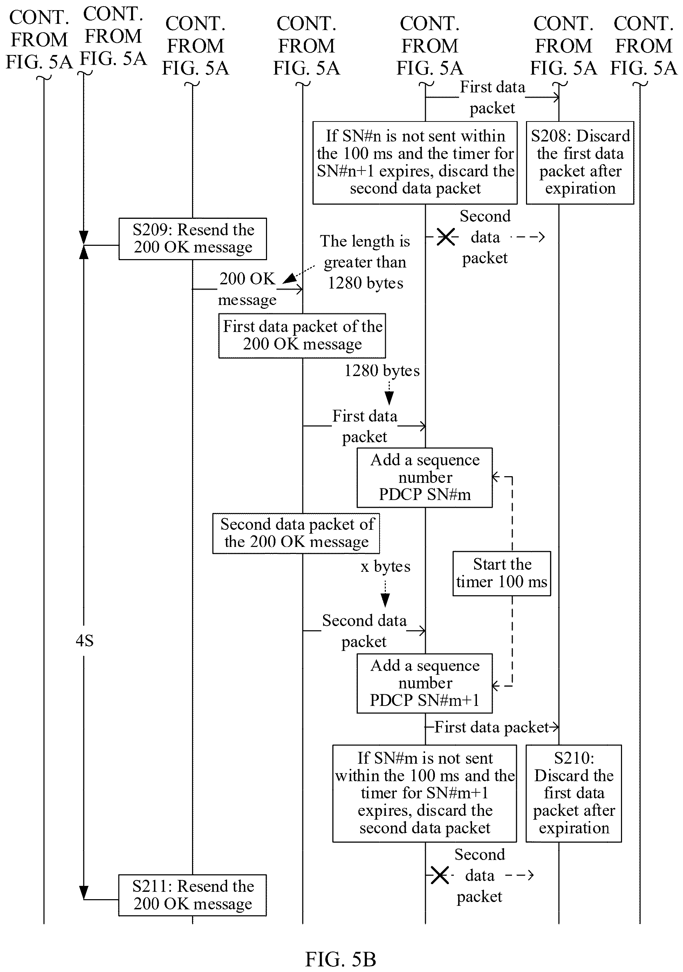

The following uses a QCI5 service as an example, and provides, with reference to FIG. 5A and FIG. 5B, a scenario example in which service abnormality occurs due to an improper PDCP discard timer duration configured by a network device.

The scenario example may include a network device, a terminal device 1, and a terminal device 2. The network device may include a base station and a remote device. The terminal device 1 is a called device, and the terminal device 2 is a calling device. An application processor (application processor, AP) and a modem processor connected to the AP are disposed in the terminal device 1. The modem processor is divided into a session initialization protocol (session initialization protocol, SIP) layer, a transmission control protocol (transmission control protocol, TCP) layer, a user datagram protocol (user datagram protocol, UDP) layer, an internet protocol (internet protocol, IP) layer, an RRC layer, and a PDCP layer. It should be understood that a structure setting of the terminal device 2 is similar to that of the terminal device 1. Details are not described herein again.

As shown in FIG. 5A and FIG. 5B, the scenario example may include S201-S211.

S201: The network device sends an RRC reconfiguration message to the terminal device 1 and the terminal device 2, where the RRC reconfiguration message includes a PDCP discard timer duration of a DRB of IMS signaling.

Specifically, the network device may send the RRC reconfiguration message to RRC layers of the terminal device 1 and the terminal device 2. The RRC reconfiguration message is an instruction sent in an RRC reconfiguration process. An objective of RRC reconfiguration is to modify an RRC connection, for example, establishing, modifying, or releasing a radio bearer (radio bearer, RB), performing synchronous reconfiguration, setting, modifying, or releasing measurement, adding, modifying, or releasing a secondary cell (secondary cell, SCell), adding, modifying, or releasing a conditional handover configuration, and adding, modifying, or releasing a primary serving cell (primary cell, PCell).

When an RRC reconfiguration start condition is met, the network device initiates an RRC reconfiguration procedure to a terminal device in an RRC-CONNECTED state. The network device sends an RRC reconfiguration message (RRCReconfiguration) to the terminal device, where the RRC reconfiguration message includes a PDCP discard timer duration of a DRB of IMS signaling. After completing reconfiguration content, the terminal device returns a response message (RRCReconfigurationComplete) to the network device.

For example, the RRC reconfiguration start condition may be any one of the following: A radio link failure of a master cell group (master cell group, MCG) is detected; a radio link failure of an MCG is detected during transmission suspension in a secondary cell group (secondary cell group, SCG); a radio link failure of an MCG is detected when a primary secondary cell (primary secondary cell, PSCell) of a secondary cell group is changed; an integrity check failure indication for a signaling radio bearer (signaling radio bearer, SRB) is received from a lower layer; RRC connection reconfiguration fails; MCG transmission is suspended due to SCG synchronization failure during reconfiguration; or SCG change fails when MCG transmission is suspended. Certainly, there may alternatively be another possible RRC reconfiguration start condition. Details are not described herein again.

Table 1 shows parameters specified in a protocol and respectively set by a base station for different quality of service class identifier (quality of service class identifier, QCI) services. A QCI5 service is used as an example. As shown in Table 1, a PDCP packet discard timer specified in the protocol is infinity, and a PDCP packet discard timer specified by the base station is 100 ms. That is, the network device considers, by default, that the PDCP discard timer duration configured for the bearer is 100 ms.

**Table 1**

| Specification parameter name | | Range specified in the protocol | Base station | |
|---|---|---|---|---|
| | | | Corresponding parameter name | Actual value |
| PDCP layer | PDCP sequence number (CQI1/CQI2) | 7 bits | Length of a PDCP SN | 7 bit |
| | PDCP sequence number (CQI5/CQI9) | 12 bits | Length of a PDCP SN | 12 bit |
| | PDCP packet discard timer (QCI1) | Infinity | Discard timer (QCI1) | 100 ms |
| | PDCP packet discard timer (QCI2) | Infinity | Discard timer (QCI2) | 100 ms |
| | PDCP packet discard timer (QCI5) | Infinity | Discard timer (QCI5) | 100 ms |
| | PDCP packet discard timer (QCI9) | 1500 ms | Discard timer (QCI9) | 1500 ms |
| RLC layer | RLC mode | QCI1=UM | RLC bearer type | QCI1=UM |
| | | QCI2=UM | | QCI2=UM |
| | | QCI5=AM | | QCI5=AM |
| | | QCI9=AM | | QCI9=AM |
| | RLC packet reordering timer (uplink and downlink) | 50 ms | None | 50 ms |
| | Maximum quantity of RLC retransmissions (uplink and downlink) | <16 | None | - |

S202: The terminal device 2 sends a first INVITE message to the terminal device 1 through the network device, in response to the first INVITE message, the terminal device 1 rings and sends a 180 Ringing message to the terminal device 2 through the network device, and the terminal device 2 starts to play a customized ring back tone.

For example, a session signaling procedure of an IMS user corresponding to S202 is as follows:
The terminal device 2 sends the first INVITE message to the network device.

The network device immediately sends a 100 Trying response message to the terminal device 2, to stop retransmission of the first INVITE message.

The network device searches a location server for an address of the terminal device 1, and forwards the first INVITE message to the terminal device 1 after obtaining the address.

The network device sends a 183 Trying message to the terminal device 2, to indicate session progress.

The terminal device 2 sends an acknowledgement (PRACK) message to the network device.

The network device sends an ACK response message to the terminal device 2, to acknowledge the PRACK request.

The terminal device 2 sends an update request to the network device, to request to update information such as a capability of the terminal device 2.

The network device sends an ACK response message to the terminal device 2, to acknowledge the Update request.

The terminal device 1 rings and sends the 180 Ringing message to the terminal device 2.

The terminal device 2 starts to play the customized ring back tone, that is, a ring back tone.

S203: The terminal device 1 sends a 200 OK message returned for the first INVITE message to the network device in response to an answer operation of a user.

Specifically, the AP of the terminal device 1 receives the answer operation of the user. The AP of the terminal device 1 delivers an answer notification to a SIP layer of the terminal device 1 in response to the answer operation. The SIP layer of the terminal device 1 sends the 200 OK message returned for the first INVITE message to the network device.

S204: The network device returns an acknowledgement (ACK) message returned for the 200 OK message to the terminal device.

Specifically, the network device may return the ACK message returned for the 200 OK message to the SIP layer of the terminal device 1.

S205: The network device sends a second INVITE message to the terminal device 1.

Specifically, the network device may send the second INVITE message to the SIP layer of the terminal device 1. The second INVITE message may also be referred to as a Reinvite message, and the Reinvite message is a message resent for the first INVITE message.

It is assumed that when the terminal device 1 receives the first INVITE message, a call identification number (call ID) of the first INVITE message is 255. In this case, the call identification number is invalid. The terminal device may reassign the call identification number to 281. When the second INVITE message is subsequently sent, a call identification number of the second INVITE message is 281.

It should be noted that different from the first INVITE message, the second INVITE message further includes a tag (tag), and the tag may be used to distinguish between the first INVITE message and the second INVITE message.

For example, a code segment of the second INVITE message is as follows:
"To:tel:***********3612;transport=udp;tag=1703227949", where "To" indicates a called device, that is, the terminal device 1, and
"tag=1703227949" is the tag carried in the second INVITE message.

S206: The terminal device 1 sends a 100 Trying message returned for the second INVITE message to the network device.

Specifically, the SIP layer of the terminal device 1 sends the 100 Trying message returned for the second INVITE message to the network device.

S207: The terminal device 1 sends a 200 OK message returned for the second INVITE message to the network device, and starts a PDCP discard timer (that is, starts timing). After the PDCP discard timer expires, the terminal device 1 discards the 200 OK message, and stops the PDCP discard timer (that is, stops timing).

The 200 OK message for the second INVITE message is a UDP packet.

Specifically, the SIP layer of the terminal device 1 delivers the 200 OK message to a TCP/UDP/IP layer of the terminal device 1. The TCP/UDP/IP layer of the terminal device 1 determines whether a length of the 200 OK message is greater than or equal to a fragmentation threshold. If the length of the 200 OK message is greater than or equal to the fragmentation threshold, the TCP/UDP/IP layer of the terminal device 1 splits the 200 OK message into two data packets, and sends the two data packets to a PDCP layer of the terminal device 1.

The IMS signaling is usually longer than a voice packet. For example, the length of the 200 OK message returned for the second INVITE message may exceed 1500 bytes (bytes). Based on a chip setting, the fragmentation threshold of the 200 OK message returned for the second INVITE message is 1280 bytes or 1232 bytes. Therefore, the 200 OK message returned for the second INVITE message needs to be split into two data packets for transmission. For example, a length of a first data packet of the 200 OK message returned for the second INVITE message is 1280 bytes, and a length of a second data packet of the 200 OK message for the second INVITE message is x bytes. That is, the length of the 200 OK message for the second INVITE message is (1280+x) bytes.

After the TCP/UDP/IP layer of the terminal device 1 splits the 200 OK message returned for the second INVITE message into two data packets, the TCP/UDP/IP layer of the terminal device 1 first sends the first data packet of the 200 OK message for the second INVITE message to the PDCP layer, and then sends the second data packet of the 200 OK message for the second INVITE message to the PDCP layer. It should be noted that because a sending time interval between the first data packet and the second data packet is relatively short, it may be considered that the two data packets are simultaneously sent to the PDCP layer.

For example, some code of the 200 OK message for the second INVITE message is as follows:
[2 IPv6 Fragments (1540 Bytes): #1533 (1280), #1534 (260)];
[Frame: 1533, payload: 0-1279 (1280 Bytes)];
[Frame: 1534, payload: 1280-1539 (260 Bytes)].

That is, the 200 OK message with a length of 1540 bytes is split into two parts: One is a first data packet with a sequence number of #1533 and a size of 1280 bytes; and the other is a second data packet with a sequence number of #1534 and a size of 260 bytes.

The PDCP layer of the terminal device 1 first receives the first data packet of the 200 OK message, adds a sequence number PDCP SN#n to the first data packet, and starts a PDCP discard timer 1 corresponding to PDCP SN#n, that is, starts timing; and then receives the second data packet of the 200 OK message, adds a sequence number PDCP SN#n+1 to the second data packet, and starts a PDCP discard timer 2 corresponding to PDCP SN#n+1, that is, starts timing. After the sequence numbers are respectively added to the two data packets, PDCP SN#n and PDCP SN#n+1 wait for network scheduling for sending. Both a duration of the PDCP discard timer 1 and a duration of the PDCP discard timer 2 are 100 ms configured by the network device. Herein, n is a positive integer.

After a resource is scheduled for PDCP SN#n, the PDCP layer of the terminal device 1 starts to send the first data packet to the network device. Specifically, in a case of network congestion, the first data packet that is first sent is fragmented into dozens or even hundreds of data packets and sequentially sent. In this case, a sending duration of the first data packet may exceed 100 ms. Because the TCP/UDP/IP layer of the terminal device 1 almost simultaneously sends the two data packets to the PDCP layer, a time interval between receiving the first data packet and receiving the second data packet by the PDCP layer of the terminal device 1 is relatively short, for example, there is a difference of 1 ms. Each time the PDCP layer of the terminal device 1 receives a data packet, a PDCP SN is immediately added, and a timer corresponding to the data packet is started. During network congestion, if a sending duration of PDCP SN#n exceeds 100 ms, the PDCP discard timer 2 for PDCP SN#n+1 also expires.

It should be noted that in FIG. 5A and FIG. 5B, an example in which the PDCP layer of the terminal device 1 sends the first data packet to the network device is used for description. In actual implementation, PDCP SN#n first arrives at the base station, the base station obtains raw data of the first data packet through parsing, and then the base station sends the first data packet to a remote device in a wired transmission manner. The first data packet has no SN.

S208: The network device receives the first data packet, and discards the received first data packet after expiration.

After receiving the first data packet, the network device may start a timer. Because the terminal device 1 discards the second data packet after the PDCP discard timer expires, the network device still cannot receive the second data packet after the timer expires. In this case, the network device discards the received first data packet. The network device does not receive a complete 200 OK message, and therefore does not return an acknowledgement message returned for the 200 OK message to the terminal device 1.

It should be noted that the IMS signaling is usually transmitted by using a UDP, and the UDP does not support notifying the network device to transmit only the second data packet. Therefore, after the PDCP discard timer 2 for PDCP SN#n+1 expires, the terminal device 1 starts a retransmission mechanism shown in S209-S211.

For example, in the retransmission mechanism, expiration retransmission intervals are sequentially 2S (second), 4S, 8S, and the like.

S209: After waiting for the expiration retransmission interval of 2S, the terminal device 1 resends the 200 OK message returned for the second INVITE message to the network device, and starts the PDCP discard timer (that is, starts timing). After the PDCP discard timer expires, the terminal device 1 discards the 200 OK message, and stops the PDCP discard timer (that is, stops timing).

Specifically, after waiting for the expiration retransmission interval of 2S, the SIP layer of the terminal device 1 delivers the 200 OK message for the second INVITE message to the TCP/UDP/IP layer of the terminal device 1 again. The TCP/UDP/IP layer of the terminal device 1 determines whether the length of the 200 OK message is greater than or equal to the fragmentation threshold. If the length of the 200 OK message is greater than or equal to the fragmentation threshold, the TCP/UDP/IP layer of the terminal device 1 splits the 200 OK message into two data packets, and sends the two data packets to the PDCP layer of the terminal device 1. The PDCP layer of the terminal device 1 first receives the first data packet of the 200 OK message, adds a sequence number PDCP SN#m to the first data packet, and starts the PDCP discard timer 1 corresponding to PDCP SN#m; and then receives the second data packet of the 200 OK message, adds a sequence number PDCP SN#m+1 to the second data packet, and starts the PDCP discard timer 2 corresponding to PDCP SN#m+1. After the sequence numbers are respectively added to the two data packets, PDCP SN#m and PDCP SN#m+1 wait for network scheduling for sending.

After a resource is scheduled for PDCP SN#m, the PDCP layer of the terminal device 1 starts to send the first data packet to the network device. If a timing duration of the PDCP discard timer 2 for PDCP SN#m+1 expires because PDCP SN#m is not sent within the 100 ms, the PDCP layer of the terminal device 1 discards the second data packet.

S210: The network device receives the first data packet, and discards the received first data packet after expiration.

S211: After the 200 OK message fails to be sent for the second time, the terminal device 1 waits for the expiration retransmission interval of 4S, and resends the 200 OK message returned for the second INVITE message to the network device, that is, performs a next retransmission procedure.

Although the PDCP layer starts the retransmission mechanism after the second data packet is discarded because the PDCP discard timer 2 expires, only the first data packet may be sent, and the second data packet still cannot be sent.

It may be learned that when the PDCP discard timer duration configured by the network device is 100 ms, if the terminal device sets a cache duration of the data packet at the PDCP layer based on the configuration from the network device, but the network is relatively congested, a second half of the 200 OK message returned for the second INVITE message is discarded because the PDCP discard timer expires. Consequently, a one-way audio problem occurs after a call is answered, degrading user experience.

One-way audio after the call is answered means that after a user using the called device (for example, the terminal device 1) answers the call, the called device displays an answer picture, and the user using the called device considers that the call is successfully connected. However, the calling device (for example, the terminal device 2) does not receive the second half of the 200 OK message returned for the second INVITE message and therefore still displays an answer waiting picture, and a user using the calling device considers that the call is not connected. It should be noted that when one-way audio occurs after the call is answered, because a connection is established between the calling device and the called device, the network device may send a voice collected by the calling device to the called device, or may send a voice collected by the called device to the calling device. Usually, before the called device successfully sends the 200 OK message returned for the second INVITE message to the calling device, the network device determines whether to send a voice collected by one end to the other end. In a relatively common scenario, when one-way audio occurs in the call, the calling device cannot receive the voice collected by the called device, but the called device can receive the voice collected by the calling device, that is, the user using the calling device cannot hear the voice of the peer end, and the user using the called device can hear the voice of the peer end.

In view of the foregoing problem, the embodiments of this application provide a solution for dynamically adjusting a PDCP discard timer duration. When a PDCP discard timer duration that is received by a terminal device and that is configured by a network device is improper, the terminal device may override (override) the PDCP discard timer duration in any one of the following manners through QCI/5QI-based table lookup: configuring different PDCP discard timer durations for DRBs of different QCIs/5QIs; configuring different PDCP discard timer durations for different service types of a same DRB; and configuring different PDCP discard timer durations for different use scenarios of a same service type. The terminal device dynamically adjusts the PDCP discard timer duration, to effectively meet requirements of various service types/use scenarios and improve user experience.

The following describes the solution for dynamically adjusting a PDCP discard timer duration provided in the embodiments of this application.

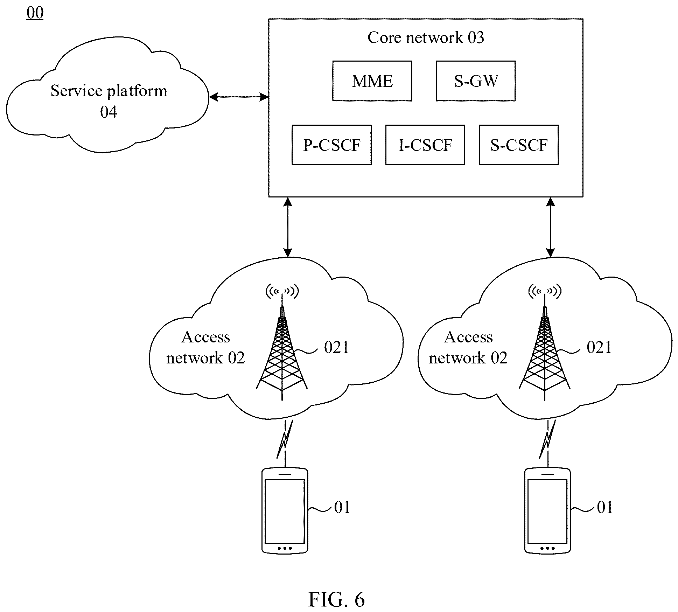

The solution for dynamically adjusting a PDCP discard timer duration provided in the embodiments of this application may be applied to a communication system shown in FIG. 6. The communication system may be a cellular communication system, a universal mobile telecommunication system terrestrial radio access network (universal mobile telecommunication system terrestrial radio access network, UTRAN) system, an evolved universal mobile telecommunications system (universal mobile telecommunications system, UMTS) terrestrial radio access network (E-UTRAN) system, a long term evolution (long term evolution, LTE) system, a new radio (new radio, NR) system, another mobile communication system such as a future mobile communication system, or the like. This is not limited in the embodiments of this application.

As shown in FIG. 6, the communication system 00 includes a terminal device 01, an access network 02, a core network 03, and a service platform 04.

The terminal device 01 is a device with a wireless transceiver function. The terminal device 01 may be a mobile terminal device or a non-mobile terminal device. For example, the terminal device 01 may be user equipment (user equipment, UE), a user unit, a user station, a mobile station, a mobile console, a remote station, a remote terminal, a mobile device, a terminal, an access terminal, a user terminal, a wireless communication device, a user agent, or a user apparatus. The access terminal may be a cellular phone, a cordless phone, a session initiation protocol (session initiation protocol, SIP) phone, a wireless local loop (wireless local loop, WLL), a personal digital assistant (personal digital assistant, PDA), a handheld device with a wireless communication function, a computer device, another processing device connected to a wireless modem, a vehicle-mounted device, a wearable device, a terminal device in a future evolved public land mobile network (public land mobile network, PLMN), or the like.

The access network 02 is a network between the core network 03 and the terminal device 01. The access network 02 includes a series of transport entities (for example, a base station 021 shown in FIG. 6) between a service node interface (service node interface, SNI) and a user network interface (user network interface, UNI), is an implementation system that provides a required transport bearer capability for providing a telecommunication service, and may be configured and managed through a management interface (Q3).

Functions of the core network 03 are mainly to provide user connectivity, manage a user, carry a service, and serve as a bearer network to provide an interface to an external network. The core network 03 may include an IMS system. The IMS system is a multimedia control/call platform in a packet-switched (packet switch, PS) domain. The IMS enables the PS domain to have some functions of a circuit-switched (circuit switching, CS) domain, and supports conversational and non-conversational multimedia services. IP media service types supported by the IMS system may include an information service, a multimedia call voice service, enhanced call management, a group service, information sharing, online entertainment, and the like. Usually, under a premise that a SIM card is successfully registered with the IMS system, the IMS system may provide a call service/call voice service and the like to the SIM card. Core network elements of the IMS system include a proxy-call session control function (proxy-call session control function, P-CSCF), an interrogation-call session control function (interrogation-call session control function, I-CSCF), and a serving-call session control function (serving-call session control function, S-CSCF). The P-CSCF is a first connection point between the IMS system and the terminal device, and provides a proxy function, that is, accepts and forwards a service request. The I-CSCF is similar to a gateway node of the IMS system, and is responsible for allocating the S-CSCF, route query, IMS inter-domain topology hiding, and the like. The S-CSCF is at a core control position in the IMS system, and is responsible for registration and authentication of the terminal device, conference control, user data management, and the like. It should be understood that the core network 03 may further include other functional entities, for example, a mobility management entity (mobility management entity, MME), a multimedia resource function (multimedia resource function, MRF), a home subscriber server (home subscriber server, HSS), a media gateway control function (media Gateway Control Function, MGCF), an IMS media gateway (IMS media gateway, IMS MGW), and a signaling gateway (signaling gateway, SGW).

The service platform 04 is an intermediate layer between a service logic application and an infrastructure platform, and resolves interaction and management problems between a service description of application software and each of an operating system platform and a software infrastructure platform.

In this embodiment of this application, the terminal device 01, the access network 02, the core network 03, and the service platform 04 may perform data transmission by using an air interface (radio) resource. The air interface resource may include at least one of a time domain resource, a frequency domain resource, and a code domain resource.

It should be noted that each device in FIG. 6 in this embodiment of this application may be implemented by one device, or may be a functional module in one device. This is not specifically limited in the embodiments of this application. It may be understood that the foregoing function may be a network element in a hardware device, a software function running on dedicated hardware, a virtualized function instantiated on a platform, or a chip system. In the embodiments of this application, the chip system may include a chip, or may include a chip and another discrete device.

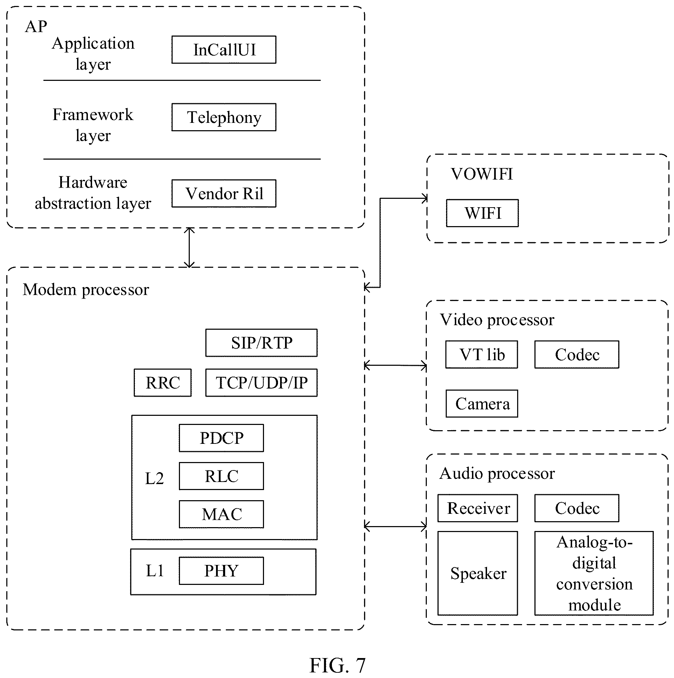

For example, FIG. 7 is a schematic diagram of a structure of a terminal device. For example, the terminal device may be the terminal device 01 in the communication system shown in FIG. 6. As shown in FIG. 7, the terminal device may include an AP, a modem processor connected to the AP, a wireless fidelity (wireless fidelity, Wi-Fi) module connected to the modem processor, a video processor, an audio processor, and the like.

The AP uses a layered architecture, and each layer has a clear role and task. Layers communicate with each other through a software interface. An Android system of a layered architecture is used as an example, and includes an application layer, a framework layer, a hardware abstraction layer, and the like from top to bottom. The application layer may include a series of application packages, for example, a dialer (dialer) application, a telephony (telephony) application, a telecomm (telecomm) application, and a dialing interface (incallUI) application. When these application packages are run, an application programming interface (application programming interface, API) may be used to access various service modules provided at the application framework layer and execute corresponding intelligent services. The framework (framework, FW) layer is used to support running of each application at the application layer. For example, the framework layer may include a telephony (telephony) framework module and a telecom framework (telecom fw) module, and the telephony (telephony) framework module may include RIL.java, that is, RILJ. The hardware abstraction layer (HAL) is an interface layer that is located between an operating system kernel and a hardware circuit, and is intended to abstract hardware. To protect an intellectual property of a hardware manufacturer, the hardware abstraction layer hides hardware interface details of a specific platform. For example, the hardware abstraction layer may include an audio interface layer module (radio interface layer demon, RILD). The RILD is a bridge for communication between the modem processor and the Android system.

The modem processor includes a SIP layer, a real-time transport protocol (real-time transport protocol, RTP) layer, a TCP layer, a UDP layer, an IP layer, an RRC layer, a PDCP layer, an RLC layer, a MAC layer, a physical layer (physical layer), and the like.

The Wi-Fi module is specifically VOWIFI shown in FIG. 7. Through VOWIF, a user may use Wi-Fi access to make and receive voice or video calls while using the mobile internet.

The video processor includes a VTlib, a codec, a camera, and the like.

The audio processor includes a receiver, a speaker, a codec, an analog-to-digital conversion module, and the like. In a voice call process, the audio processor processes collected audio data to obtain a voice frame and a silent frame. The voice frame is a frame in which voice data includes a valid voice signal. For example, data collected when the user is speaking is a voice frame. The silent frame is a frame in which voice data includes an invalid voice signal. For example, data collected when the user is not speaking is a silent frame.

It may be understood that the structure shown in FIG. 7 does not constitute a specific limitation on the terminal device. In some other embodiments, the terminal device may include more or fewer components than those shown in the figure, or some components may be combined, or some components may be split, or different component arrangements may be used. The components shown in the figure may be implemented by hardware, software, or a combination of software and hardware.

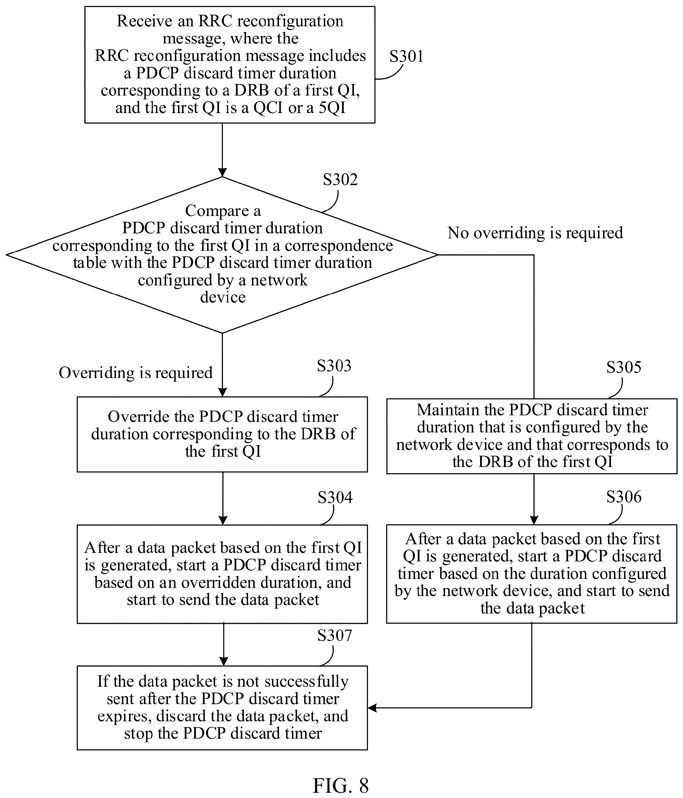

FIG. 8 is a schematic flowchart of a method for dynamically adjusting a PDCP discard timer duration. The method may be performed by the terminal device shown in FIG. 6 and FIG. 7 or one or more functional modules in the terminal device.

As shown in FIG. 8, the method may include S301-S307.

S301: The terminal device receives an RRC reconfiguration message sent by a network device, where the RRC reconfiguration message includes a PDCP discard timer duration corresponding to a DRB (which is briefly referred to as a first DRB) of a first QI.

The first QI is a QCI or a 5G QoS identifier (5G QoS identifier, 5QI). The QCI is an LTE PDN connection parameter, and the 5QI is an NR PDU session parameter. Different QCI/5QI values indicate different bearer types.

For LTE, a DRB of one QCI is used to indicate one service type. For example, Table 2 shows service types indicated by DRBs of different QCIs. A DRB of each QCI indicates a fixed service type.

**Table 2**

| QCI | Service type |
|---|---|
| 1 | Voice session |
| 2 | Video session (live streaming service) |
| 3 | Real-time game |
| 4 | Non-conversational video (buffered streaming service) |
| 5 | IMS signaling |
| 6 | Video (buffered streaming service) and TCP-based service (for example, WWW, E-mail, chat, ftp, P2P, file sharing, and progressive video scanning) |
| 7 | Voice, video (live streaming service), and interactive game |
| 8 | Video (buffered streaming service) and TCP-based service (for example, WWW, E-mail, chat, ftp, P2P, file sharing, and progressive video scanning) |
| 9 | |

For NR, a DRB of one 5QI is used to indicate one service type. For example, Table 3 shows service types indicated by DRBs of different 5QIs. A DRB of each 5QI indicates a fixed service type.

**Table 3**

| 5QI | Service type |
|---|---|
| 1 | Voice session |
| 2 | Video session (live streaming service) |
| 3 | Real-time game, V2X message, power distribution (medium voltage), and process automation (monitoring) |
| 4 | Non-conversational video (buffered streaming service) |
| 5 | IMS signaling |
| 6 | Video (buffered streaming service) and TCP-based service (for example, WWW, E-mail, chat, ftp, P2P, file sharing, and progressive video scanning) |
| 7 | Voice, video (live streaming service), and interactive game |
| 8 | Video (buffered streaming service) and TCP-based service (for example, WWW, E-mail, chat, ftp, P2P, file sharing, and progressive video scanning) |
| 9 | |
| 65 | Mission-critical user plane push-to-talk voice (for example, MCPTT) |
| 66 | Non-mission-critical user plane push-to-talk voice |
| 67 | Mission-critical user plane video |
| 69 | Mission-critical delay-sensitive signaling |
| 70 | Mission-critical personnel data |
| 79 | V2X signaling |
| ...... | ... |

Based on the descriptions in the foregoing embodiment, for LTE or NR, DRBs of different QCIs/5QIs are used to carry different service types. The network device may separately configure a PDCP discard timer duration for a DRB of each QCI/5QI based on a characteristic of a service type.

In an implementation, the RRC reconfiguration message may include a PDCP discard timer duration corresponding to a DRB of one QCI/5QI, that is, the first QI is any QCI/5QI in Table 2 or Table 3. The first DRB is used to transmit data of a service type indicated by the first QI.

Table 2 is used as an example. The RRC reconfiguration message may include a PDCP discard timer duration corresponding to a DRB of QCI=1. The DRB of QCI=1 may be used to transmit voice service data, and the network device may configure a PDCP discard timer duration corresponding to the voice service data as infinity.

In another implementation, the RRC reconfiguration message may include PDCP discard timer durations corresponding to DRBs of a plurality of QCIs/5QIs, that is, the first QI includes a plurality of QCIs/5QIs in Table 2 or Table 3. Each DRB in the first DRB corresponds to one PDCP discard timer duration. Each DRB is separately used to transmit data of a service type indicated by one QCI/5QI.

Table 2 is used as an example. The RRC reconfiguration message may include PDCP discard timer durations respectively corresponding to a DRB 1 of QCI=1, a DRB 2 of QCI=2, a DRB 3 of QCI=9, and a DRB 4 of QCI=5. The DRB 1 of QCI=1 is used to transmit voice service data, and the network device may configure a PDCP discard timer duration corresponding to the voice service data as infinity. The DRB 2 of QCI=2 is used to transmit video service data, and the network device may configure a PDCP discard timer duration corresponding to the video service data as infinity. The DRB 3 of QCI=9 is used to transmit internet access data, and the network device may configure a PDCP discard timer duration corresponding to the internet access data as 3000 ms. The DRB 4 of QCI=5 is used for IMS signaling, and the network device may configure a PDCP discard timer duration corresponding to the IMS signaling as 100 ms.

It should be noted that whether the RRC reconfiguration message includes a PDCP discard timer duration corresponding to a DRB of one QCI/5QI or includes PDCP discard timer durations corresponding to DRBs of a plurality of QCIs/5QIs is determined by the network device.

With reference to the descriptions in the foregoing embodiment, due to impact of a plurality of factors such as a service type, a quantity of users using a service, a location at which the service is used, and a time when the service is used, the PDCP discard timer duration configured by the network device may be excessively long or excessively short. Therefore, this embodiment of this application provides a solution in which the terminal device performs optimization and compatibility on the PDCP discard timer duration, that is, performs S302-S307.

S302: The terminal device compares a PDCP discard timer duration corresponding to the first QI in a correspondence table with the PDCP discard timer duration configured by the network device.

The terminal device may locally store a correspondence table between each QCI and a PDCP discard timer duration and a correspondence table between a 5QI and a PDCP discard timer duration. The correspondence table is prestored before the terminal device is delivered from a factory, or may be obtained by the terminal device from a server in a use process. Each time the terminal device receives the RRC reconfiguration message sent by the network device, the terminal device may look up the table based on the first QI, to determine whether the PDCP discard timer duration corresponding to the DRB of the first QI needs to be overridden.

For ease of description, in all the following embodiments, an example in which a PDCP discard timer duration corresponding to a DRB of a QCI is dynamically adjusted is used for description. It should be understood that a manner of dynamically adjusting a PDCP discard timer duration corresponding to a DRB of a 5QI is similar to a manner of dynamically adjusting the PDCP discard timer duration corresponding to the DRB of the QCI.

The following provides three correspondence tables between the QCI and the PDCP discard timer duration by using three examples.

Example 1: In the correspondence table, a DRB of each QCI corresponds to one PDCP discard timer duration.

For example, Table 4 shows a PDCP discard timer duration corresponding to a DRB of each QCI. As shown in Table 4, there are nine QCI levels: QCI=1, 2, ..., and 9. The DRB of each QCI corresponds to one PDCP discard timer duration. For example, for a DRB of QCI=5, because IMS signaling is relatively long, the PDCP discard timer duration may be set to be relatively long; for DRBs of QCI=1 and 2, because a video and a voice require a relatively low delay, the PDCP discard timer duration may be set to be relatively short; and for a DRB of QCI=9, a data service is usually transmitted, and the PDCP discard timer duration is set to 1000 ms based on a characteristic of the data service.

**Table 4**

| QCI | PDCP discard timer duration |
|---|---|
| 1 | 500 ms |
| 2 | 500 ms |
| 3 | 100 ms |
| 4 | 750 ms |
| 5 | 3000 ms |
| 6 | 1000 ms |
| 7 | 500 ms |
| 8 | 1000 ms |
| 9 | 1000 ms |

Example 2: In the correspondence table, each service type of a same QCI corresponds to one PDCP discard timer duration.

For example, Table 5 shows a PDCP discard timer duration corresponding to each service type of a QCI. As shown in Table 5, one QCI may be classified into a plurality of service types. For example, QCI=1 includes a voice frame and a silent frame, QCI=6, 8, and 9 include a UDP and a TCP, and QCI=7 includes a voice, a video, and an interactive game. When one QCI is classified into a plurality of service types, a PDCP discard timer duration may be set based on a characteristic of each service type. For example, for a DRB of QCI=1, the voice frame includes more useful data information, and the silent frame includes less useful data information. Therefore, the PDCP discard timer duration corresponding to the voice frame may be set to 500 ms, and the PDCP discard timer duration corresponding to the silent frame may be set to 100 ms. For another example, for DRBs of QCI=6, 8, and 9, the UDP requires a relatively low delay. Therefore, the PDCP discard timer duration corresponding to the UDP may be set to 750 ms, and the PDCP discard timer duration corresponding to the TCP may be set to 1000 ms. For another example, for a DRB of QCI=7, the interactive game requires a relatively low delay. Therefore, the PDCP discard timer duration corresponding to the interactive game may be set to 150 ms, and the PDCP discard timer duration corresponding to each of the voice and the video may be set to 500 ms.

It should be noted that as shown in QCI=2, 3, 4, and 5, one QCI may not be classified into a plurality of service types, that is, a DRB of one QCI corresponds to only one PDCP discard timer duration.

**Table 5**

| QCI | Service type | PDCP discard timer duration |
|---|---|---|
| 1 | Voice frame | 500 ms |
| | Silent frame | 100 ms |
| 2 | Video session (live streaming service) | 500 ms |
| 3 | Real-time game | 100 ms |
| 4 | Non-conversational video (buffered streaming service) | 3000 ms |
| 5 | IMS signaling | 3000 ms |
| 6 | UDP | 750 ms |
| | TCP | 1000 ms |
| 7 | Voice | 500 ms |
| | Video | 500 ms |
| | Interactive game | 150 ms |
| 8 | UDP | 750 ms |
| | TCP | 1000 ms |
| 9 | UDP | 750 ms |
| | TCP | 1000 ms |

Example 3: In the correspondence table, different use scenarios of a same service type of a same QCI respectively correspond to different PDCP discard timer durations.

For example, Table 6 shows PDCP discard timer durations respectively corresponding to a same service type of a same QCI in different use scenarios. As shown in Table 6, one QCI may include at least one service type, and some service types in the at least one service type correspond to a plurality of use scenarios. When one service type of one QCI is classified into a plurality of use scenarios, the terminal device sets a PDCP discard timer duration based on a characteristic of each use scenario. For example, for a DRB of QCI=3, only one service type, that is, the real-time game, is included. The real-time game may be divided into a game time period and a non-game time period. Because the game time period requires a relatively low delay, the PDCP discard timer duration corresponding to the game time period is set to 100 ms, and the PDCP discard timer duration corresponding to the non-game time period is set to 150 ms. For another example, for a DRB of QCI=7, three service types, that is, the voice, the video, and the interactive game, are included. The interactive game may be divided into a game time period and a non-game time period. Because the game time period requires a relatively low delay, the PDCP discard timer duration corresponding to the game time period is set to 150 ms, and the PDCP discard timer duration corresponding to the non-game time period is set to 300 ms.

**Table 6**

| QCI | Service type | Use scenario | PDCP discard timer duration |
|---|---|---|---|
| 1 | Voice frame | - | 500 ms |
| | Silent frame | - | 100 ms |
| 2 | Video session (live streaming service) | - | 500 ms |
| 3 | Real-time game | Game time period | 100 ms |
| | | Non-game time period | 150 ms |
| 4 | Non-conversational video (buffered streaming service) | - | 3000 ms |
| 5 | IMS signaling | - | 3000 ms |
| 6 | UDP | - | 750 ms |
| | TCP | - | 1000 ms |
| 7 | Voice | - | 500 ms |
| | Video | - | 500 ms |
| | Interactive game | Game time period | 150 ms |
| | | Non-game time period | 300 ms |
| 8 | UDP | - | 750 ms |
| | TCP | - | 1000 ms |
| 9 | UDP | - | 750 ms |
| | TCP | - | 1000 ms |

Table 4 to Table 6 show corresponding PDCP discard timer durations that are set for DRBs of different QCIs, different service types of a same QCI, and different use scenarios of a same service type of a same QCI. The terminal device may determine, based on any table in Table 3 to Table 5, whether the PDCP discard timer duration corresponding to the first DRB needs to be overridden.

It should be noted that the service types, the use scenarios, and the PDCP discard timer durations in Table 4 and Table 5 are merely examples for description, and constitute no limitation on this application. In actual implementation, the service types, the use scenarios, and the PDCP discard timer durations may be adjusted based on an actual use requirement.

In some embodiments, the terminal device may determine, in any one of the following manners, whether to override the PDCP discard timer duration corresponding to the first DRB.

### (1) First implementation

The terminal device first looks up the table based on the first QI, to determine the PDCP discard timer duration corresponding to the first QI; and then compares the PDCP discard timer duration corresponding to the first QI in the correspondence table with the PDCP discard timer duration configured by the network device. If the two durations are not equal, it is determined that the PDCP discard timer duration corresponding to the DRB of the first QI needs to be overridden. If the two durations are equal, it is determined that the PDCP discard timer duration corresponding to the DRB of the first QI does not need to be overridden.

In a scenario example, it is assumed that the correspondence table looked up by the terminal device is Table 3. In Table 3, a DRB of each QCI corresponds to one PDCP discard timer duration. In this case, a table lookup result includes only one duration. The terminal device may compare the one duration with the PDCP discard timer duration configured by the network device.

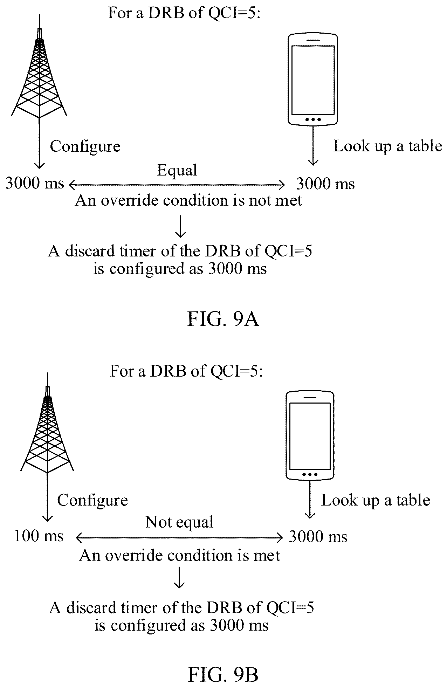

For example, as shown in FIG. 9A, for the DRB of QCI=5, a PDCP discard timer duration configured by the network device is 3000 ms, and the terminal device determines, by looking up Table 3, that a PDCP discard timer duration is 3000 ms. Because the two durations are equal, the PDCP discard timer duration corresponding to the DRB of the first QI does not need to be overridden. As shown in FIG. 9B, for the DRB of QCI=5, a PDCP discard timer duration configured by the network device is 100 ms, and the terminal device determines, by looking up Table 3, that a PDCP discard timer duration is 3000 ms. Because the two durations are not equal, the PDCP discard timer duration corresponding to the DRB of the first QI needs to be overridden.

In another scenario example, it is assumed that the correspondence table looked up by the terminal device is Table 4 or Table 5. In Table 4 and Table 5, DRBs of some QCIs correspond to a plurality of PDCP discard timer durations. In this case, a table lookup result is a plurality of durations. When PDCP discard timer durations are respectively configured for different service types of one QCI or different use scenarios of a same service type in the correspondence table, a PDCP discard timer duration corresponding to a first service type/first use scenario in the correspondence table may be compared with the PDCP discard timer duration configured by the network device. The first service type is a preset service type in a plurality of service types corresponding to the first QI, and the first use scenario is a preset use scenario in a plurality of use scenarios corresponding to a service type of the first QI.

If the two durations are not equal, it is determined that the PDCP discard timer duration corresponding to the first DRB needs to be overridden, that is, a PDCP discard timer duration corresponding to the first service type/first use scenario of the first DRB is configured based on the PDCP discard timer duration corresponding to the first service type/first use scenario in the correspondence table.

If the two durations are equal, it is determined that the PDCP discard timer duration corresponding to the first DRB does not need to be overridden, that is, a PDCP discard timer duration corresponding to the first service type/first use scenario of the first DRB is configured based on the PDCP discard timer duration configured by the network device.

### (2) Second implementation

The terminal device first looks up the table based on the first QI, to determine the PDCP discard timer duration corresponding to the first QI; and then compares the PDCP discard timer duration corresponding to the first QI in the correspondence table with the PDCP discard timer duration configured by the network device.

If the first QI belongs to a first category, and the PDCP discard timer duration corresponding to the first QI in the correspondence table is greater than the PDCP discard timer duration configured by the network device, it is determined that the PDCP discard timer duration corresponding to the DRB of the first QI needs to be overridden. Alternatively, if the first QI belongs to a first category, and the PDCP discard timer duration corresponding to the first QI in the correspondence table is less than or equal to the PDCP discard timer duration configured by the network device, it is determined that the PDCP discard timer duration corresponding to the DRB of the first QI does not need to be overridden. A QCI/5QI of the first category is a QCI/5QI that allows an actual timing duration of a PDCP discard timer to be greater than a PDCP discard timer duration in the correspondence table, that is, the PDCP discard timer duration in the correspondence table is a minimum timing duration.

If the first QI belongs to a second category, and the PDCP discard timer duration corresponding to the first QI in the correspondence table is less than the PDCP discard timer duration configured by the network device, it is determined that the PDCP discard timer duration corresponding to the DRB of the first QI needs to be overridden. Alternatively, if the first QI belongs to a second category, and the PDCP discard timer duration corresponding to the first QI in the correspondence table is greater than or equal to the PDCP discard timer duration configured by the network device, it is determined that the PDCP discard timer duration corresponding to the DRB of the first QI does not need to be overridden. A QCI/5QI of the second category is a QCI/5QI that allows an actual timing duration of a PDCP discard timer to be less than a PDCP discard timer duration in the correspondence table, that is, the PDCP discard timer duration in the correspondence table is a maximum timing duration.

In a scenario example, it is assumed that the correspondence table looked up by the terminal device is Table 3. In Table 3, a DRB of each QCI corresponds to one PDCP discard timer duration. In this case, a table lookup result includes only one duration. The terminal device may compare the one duration with the PDCP discard timer duration configured by the network device.

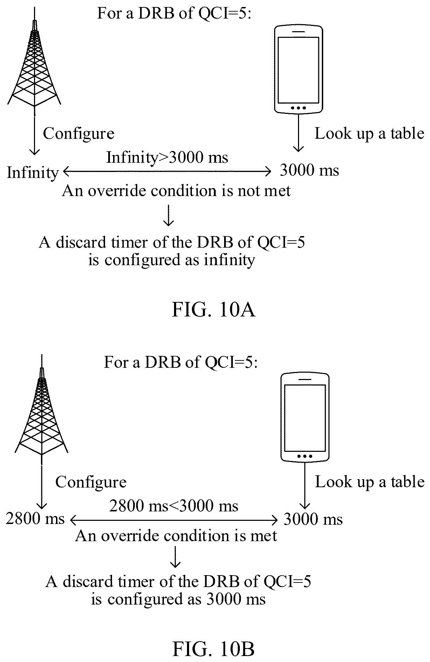

For example, it is assumed that QCI=5 is a QCI of the first category. As shown in FIG. 10A, for the DRB of QCI=5, a PDCP discard timer duration configured by the network device is infinity, and the terminal device determines, by looking up Table 3, that a PDCP discard timer duration is 3000 ms. Because the PDCP discard timer duration configured by the network device is greater than the PDCP discard timer duration 3000 ms determined by looking up the table, the PDCP discard timer duration corresponding to the DRB of the first QI does not need to be overridden. As shown in FIG. 10B, for the DRB of QCI=5, a PDCP discard timer duration configured by the network device is 2800 ms, and the terminal device determines, by looking up Table 3, that a PDCP discard timer duration is 3000 ms. Because the PDCP discard timer duration 2800 ms configured by the network device is less than the PDCP discard timer duration 3000 ms determined by looking up the table, the PDCP discard timer duration corresponding to the DRB of the first QI needs to be overridden.

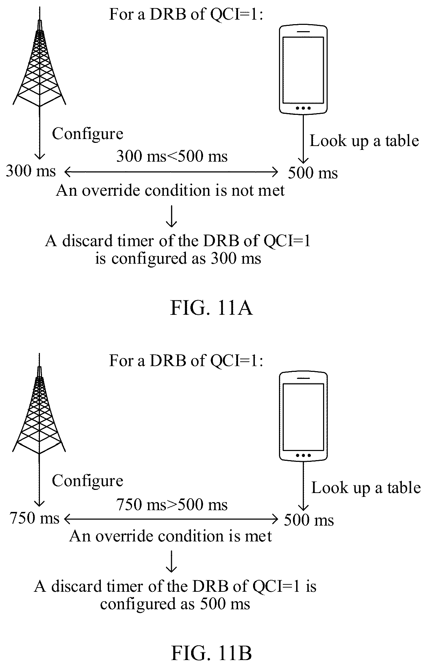

For example, it is assumed that QCI=1 is a QCI of the second category. As shown in FIG. 11A, for the DRB of QCI=1, a PDCP discard timer duration configured by the network device is 300 ms, and the terminal device determines, by looking up Table 3, that a PDCP discard timer duration is 500 ms. Because the PDCP discard timer duration 300 ms configured by the network device is less than the PDCP discard timer duration 500 ms determined by looking up the table, the PDCP discard timer duration corresponding to the DRB of the first QI does not need to be overridden. As shown in FIG. 11B, for the DRB of QCI=1, a PDCP discard timer duration configured by the network device is 750 ms, and the terminal device determines, by looking up Table 3, that a PDCP discard timer duration is 500 ms. Because the PDCP discard timer duration 750 ms configured by the network device is greater than the PDCP discard timer duration 500 ms determined by looking up the table, the PDCP discard timer duration corresponding to the DRB of the first QI needs to be overridden.

In another scenario example, it is assumed that the correspondence table looked up by the terminal device is Table 4 or Table 5. In Table 4 and Table 5, some QCIs correspond to a plurality of PDCP discard timer durations. In this case, a table lookup result is a plurality of durations. When PDCP discard timer durations are respectively configured for different service types of one QCI or different use scenarios of a same service type in the correspondence table, a PDCP discard timer duration corresponding to a first service type/first use scenario in the correspondence table may be compared with the PDCP discard timer duration configured by the network device. The first service type is a preset service type in a plurality of service types corresponding to the first QI, and the first use scenario is a preset use scenario in a plurality of use scenarios corresponding to a service type of the first QI.

If the first QI belongs to the first category, and the PDCP discard timer duration corresponding to the first service type/first use scenario in the correspondence table is greater than the PDCP discard timer duration configured by the network device, it is determined that the PDCP discard timer duration corresponding to the DRB of the first QI needs to be overridden, that is, a PDCP discard timer duration corresponding to the first service type/first use scenario of the first DRB is configured based on the PDCP discard timer duration corresponding to the first service type/first use scenario in the correspondence table. Alternatively, if the first QI belongs to the first category, and the PDCP discard timer duration corresponding to the first service type/first use scenario in the correspondence table is less than or equal to the PDCP discard timer duration configured by the network device, it is determined that the PDCP discard timer duration corresponding to the DRB of the first QI does not need to be overridden, that is, a PDCP discard timer duration corresponding to the first service type/first use scenario of the first DRB is configured based on the PDCP discard timer duration configured by the network device.

If the first QI belongs to the second category, and the PDCP discard timer duration corresponding to the first service type/first use scenario in the correspondence table is less than the PDCP discard timer duration configured by the network device, it is determined that the PDCP discard timer duration corresponding to the DRB of the first QI needs to be overridden, that is, a PDCP discard timer duration corresponding to the first service type/first use scenario of the first DRB is configured based on the PDCP discard timer duration corresponding to the first service type/first use scenario in the correspondence table. Alternatively, if the first QI belongs to the second category, and the PDCP discard timer duration corresponding to the first service type/first use scenario in the correspondence table is greater than or equal to the PDCP discard timer duration configured by the network device, it is determined that the PDCP discard timer duration corresponding to the DRB of the first QI does not need to be overridden, that is, a PDCP discard timer duration corresponding to the first service type/first use scenario of the first DRB is configured based on the PDCP discard timer duration configured by the network device.

For example, an example in which QCI=9 and QCI=9 belongs to the first category is used for description.

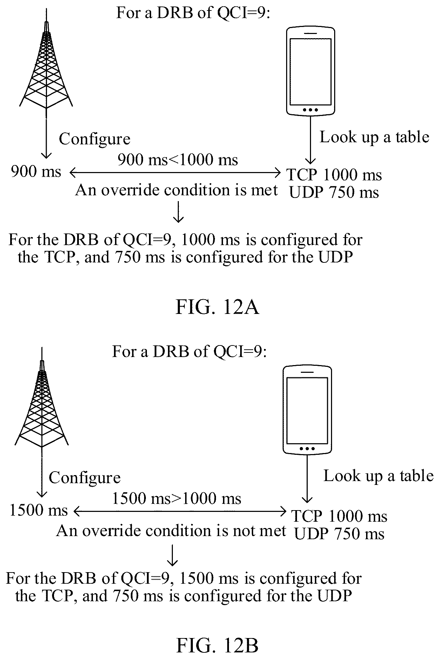

As shown in FIG. 12A, for the DRB of QCI=9, a PDCP discard timer duration configured by the network device is 900 ms, and the terminal device determines, by looking up the table, that a PDCP discard timer duration of a TCP packet is 1000 ms and a PDCP discard timer duration of a UDP packet is 750 ms. Because the PDCP discard timer duration 900 ms configured by the network device is less than the PDCP discard timer duration 1000 ms of the TCP packet determined by looking up the table, the terminal device determines that an override condition is met, configures a PDCP discard timer duration of the TCP packet as 1000 ms, and configures a PDCP discard timer duration of the UDP packet as 750 ms.

As shown in FIG. 12B, for the DRB of QCI=9, a PDCP discard timer duration configured by the network device is 1500 ms, and the terminal device determines, by looking up the table, that a PDCP discard timer duration of a TCP packet is 1000 ms and a PDCP discard timer duration of a UDP packet is 750 ms. Because the PDCP discard timer duration 1500 ms configured by the network device is greater than the PDCP discard timer duration 1000 ms of the TCP packet determined by looking up the table, the terminal device determines that an override condition is not met, configures a PDCP discard timer duration of the TCP packet as 1500 ms, and configures a PDCP discard timer duration of the UDP packet as 750 ms.

For another example, an example in which QCI=1 and QCI=9 belongs to the second category is used for description.

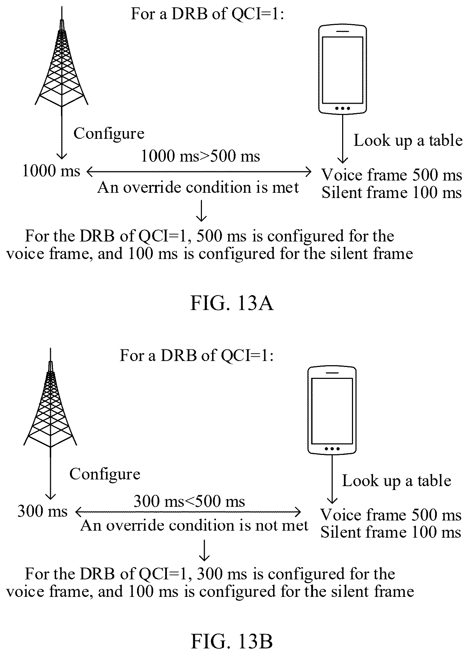

As shown in FIG. 13A, for the DRB of QCI=1, a PDCP discard timer duration configured by the network device is 1000 ms, and the terminal device determines, by looking up the table, that a PDCP discard timer duration of a voice frame is 500 ms and a PDCP discard timer duration of a silent frame is 100 ms. Because the PDCP discard timer duration 1000 ms configured by the network device is greater than the PDCP discard timer duration 500 ms of the voice frame determined by looking up the table, the terminal device determines that an override condition is met, configures a PDCP discard timer duration of the voice frame as 500 ms, and configures a PDCP discard timer duration of the silent frame as 100 ms.

As shown in FIG. 13B, for the DRB of QCI=1, a PDCP discard timer duration configured by the network device is 300 ms, and the terminal device determines, by looking up the table, that a PDCP discard timer duration of a voice frame is 500 ms and a PDCP discard timer duration of a silent frame is 100 ms. Because the PDCP discard timer duration 300 ms configured by the network device is less than the PDCP discard timer duration 500 ms of the voice frame determined by looking up the table, the terminal device determines that an override condition is not met, configures a PDCP discard timer duration of the voice frame as 300 ms, and configures a PDCP discard timer duration of the silent frame as 100 ms.

### (3) Third implementation

Regardless of the PDCP discard timer duration configured by the network device and a specific level of the first QI, the terminal device directly determines that the PDCP discard timer duration corresponding to the DRB of the first QI needs to be overridden. That is, the terminal device configures the PDCP discard timer duration based on an overridden value provided in the correspondence table, instead of referring to the PDCP discard timer duration configured by the network device.

### (4) Fourth implementation

The terminal device determines whether the first QI belongs to a third category. If the first QI belongs to the third category, regardless of the PDCP discard timer duration configured by the network device, the terminal device determines that the PDCP discard timer duration corresponding to the DRB of the first QI needs to be overridden. That is, the terminal device configures the PDCP discard timer duration based on an overridden value provided in the correspondence table, instead of referring to the PDCP discard timer duration configured by the network device. If the first QI does not belong to the third category, the terminal device determines, based on the first implementation or the second implementation, whether the PDCP discard timer duration corresponding to the DRB of the first QI needs to be overridden. A QCI/5QI of the third category is a QCI/5QI that has a relatively low error requirement for the PDCP discard timer duration, a QCI/5QI with a relatively high probability that a PDCP discard timer duration configured by the network device is inappropriate, or a QCI/5QI for which the server starts a PDCP discard mechanism.

The terminal device may determine, in any one of the foregoing manners, whether the PDCP discard timer duration corresponding to the DRB of the first QI needs to be overridden. If the PDCP discard timer duration corresponding to the DRB of the first QI needs to be overridden, the terminal device performs S303. If the PDCP discard timer duration corresponding to the DRB of the first QI does not need to be overridden, the terminal device performs S305.

S303: The terminal device overrides the PDCP discard timer duration corresponding to the DRB of the first QI.

In a first scenario example, if the terminal device obtains only one duration by looking up the table based on the first QI, the terminal device may directly override the PDCP discard timer duration corresponding to the DRB of the first QI based on the one duration.

For example, as shown in FIG. 9B and FIG. 10B, for the DRB of QCI=5, the duration obtained by looking up the table based on the first QI is 3000 ms. The terminal device overrides a PDCP discard timer duration corresponding to the DRB of QCI=5 based on 3000 ms. That is, the PDCP discard timer duration corresponding to the DRB of QCI=5 is configured as 3000 ms.

For another example, as shown in FIG. 11B, for the DRB of QCI=1, the duration obtained by looking up the table based on the first QI is 500 ms. The terminal device overrides a PDCP discard timer duration corresponding to the DRB of QCI=1 based on 500 ms. That is, the PDCP discard timer duration corresponding to the DRB of QCI=1 is configured as 500 ms.

In a second scenario example, it is assumed that the terminal device obtains a plurality of durations by looking up the table based on the first QI, for example, the PDCP discard timer duration corresponding to the first service type and a PDCP discard timer duration corresponding to a second service type. If the terminal device determines, based on the first implementation or the second implementation provided in S302, that the override condition is met, the PDCP discard timer duration corresponding to the first service type of the first DRB is configured based on the PDCP discard timer duration corresponding to the first service type in the correspondence table; and a PDCP discard timer duration corresponding to the second service type is configured based on the PDCP discard timer duration corresponding to the second service type in the correspondence table.

For example, as shown in FIG. 12A, for the DRB of QCI=9, the terminal device configures the PDCP discard timer duration of the TCP packet as 1000 ms and the PDCP discard timer duration of the UDP packet as 750 ms based on the table lookup result.

For another example, as shown in FIG. 13A, for the DRB of QCI=1, the terminal device configures the PDCP discard timer duration of the voice frame as 500 ms and the PDCP discard timer duration of the silent frame as 100 ms based on the table lookup result.

In a third scenario example, it is assumed that the terminal device obtains a plurality of durations by looking up the table based on the first QI, for example, a PDCP discard timer duration corresponding to a first use scenario of a third service type and a PDCP discard timer duration corresponding to a second use scenario of the third service type. If the terminal device determines, based on the first implementation or the second implementation provided in S302, that the override condition is met, a PDCP discard timer duration corresponding to the first use scenario of the first DRB is configured based on the PDCP discard timer duration corresponding to the first use scenario in the correspondence table; and a PDCP discard timer duration corresponding to the second use scenario of the first DRB is configured based on the PDCP discard timer duration corresponding to the second use scenario in the correspondence table. The third service type is any service type in the plurality of service types corresponding to the first QI.

In a fourth scenario example, if the terminal device obtains a plurality of durations by looking up the table based on the first QI, for example, the PDCP discard timer duration (referred to as a duration 1) corresponding to the first service type and a PDCP discard timer duration (referred to as a duration 2) corresponding to a second service type, regardless of the PDCP discard timer duration configured by the network device and a specific level of the first QI, the terminal device directly configures the duration 1 obtained by looking up the table as the PDCP discard timer duration corresponding to the first service type and the duration 2 obtained by looking up the table as a PDCP discard timer duration corresponding to the second service type.

In a fifth scenario example, if the terminal device obtains a plurality of durations by looking up the table based on the first QI, for example, the PDCP discard timer duration (referred to as a duration 1) corresponding to the first use scenario and a PDCP discard timer duration (referred to as a duration 2) corresponding to a second use scenario, regardless of the PDCP discard timer duration configured by the network device and a specific level of the first QI, the terminal device directly configures the duration 1 obtained by looking up the table as the PDCP discard timer duration corresponding to the first use scenario and the duration 2 obtained by looking up the table as a PDCP discard timer duration corresponding to the second use scenario.

It should be noted that in the foregoing several scenario examples, the second service type may be one service type, or may be a plurality of service types. If the second service type is a plurality of service types, one PDCP discard timer duration is configured for each of the plurality of service types based on the table lookup result.

S304: After a data packet based on the first QI is generated, start a PDCP discard timer, (that is, start timing), and start to send the data packet. A maximum timing duration of the PDCP discard timer is an overridden value.

If the first QI has only one service type and the service type is not classified into a plurality of use scenarios, the terminal device sets the PDCP discard timer duration of the DRB of the first QI based on an overridden duration. After the data packet based on the first QI is generated, the terminal device starts the PDCP discard timer based on the duration, and starts to send the data packet.

If the first QI has a plurality of service types or a service type has a plurality of use scenarios, the terminal device sets the PDCP discard timer duration of the first service type/first use scenario based on the table lookup result, and sets the PDCP discard timer duration of the second service type/second use scenario based on the table lookup result. After a data packet based on the first service type/first use scenario is generated, the terminal device starts a PDCP discard timer corresponding to the first service type/first use scenario, and starts to send the data packet. Alternatively, after a data packet based on the second service type/second use scenario is generated, the terminal device starts a PDCP discard timer corresponding to the second service type/second use scenario, and starts to send the data packet.

S305: Maintain the PDCP discard timer duration that is configured by the network device and that corresponds to the DRB of the first QI. That is, the terminal device defines the PDCP discard timer duration corresponding to the DRB of the first QI based on the configuration from the network device.

If the first QI has only one service type and the service type is not classified into a plurality of use scenarios, the terminal device defines the PDCP discard timer duration of the DRB of the first QI based on the configuration from the network device. After a data packet based on the first QI is generated, the terminal device starts a PDCP discard timer based on the duration, and starts to send the data packet.

If the first QI has a plurality of service types or a service type has a plurality of use scenarios, the terminal device defines the PDCP discard timer duration of the first service type/first use scenario based on the configuration from the network device, and defines the PDCP discard timer duration of the second service type/second use scenario based on the table lookup result. After a data packet based on the first service type/first use scenario is generated, the terminal device starts a PDCP discard timer corresponding to the first service type/first use scenario, and starts to send the data packet. Alternatively, after a data packet based on the second service type/second use scenario is generated, the terminal device starts a PDCP discard timer corresponding to the second service type/second use scenario, and starts to send the data packet.

S306: After a data packet based on the DRB is generated, the terminal device starts a PDCP discard timer (that is, starts timing) corresponding to the DRB based on the PDCP discard timer duration configured by the network device, and starts to send the data packet. A maximum timing duration of the PDCP discard timer is the PDCP discard timer duration configured by the network device.

After S304 and S306, the terminal device may perform S307.

S307: If the data packet is not successfully sent after the duration of the PDCP discard timer reaches the PDCP discard timer duration (that is, the PDCP discard timer expires), the terminal device discards the data packet, and stops the PDCP discard timer (that is, stops timing).

In the foregoing solution for dynamically adjusting a PDCP discard timer duration, when the PDCP discard timer duration that is received by the terminal device and that is configured by the network device is excessively long or excessively short, the terminal device may configure different PDCP discard timer durations for DRBs of different QCIs/5QIs; configure different PDCP discard timer durations for different service types of a same DRB; and configure different PDCP discard timer durations for different use scenarios of a same service type. The terminal device dynamically adjusts the PDCP discard timer duration, to effectively meet requirements of various service types/use scenarios, for example, shorten a duration of lag or one-way audio.

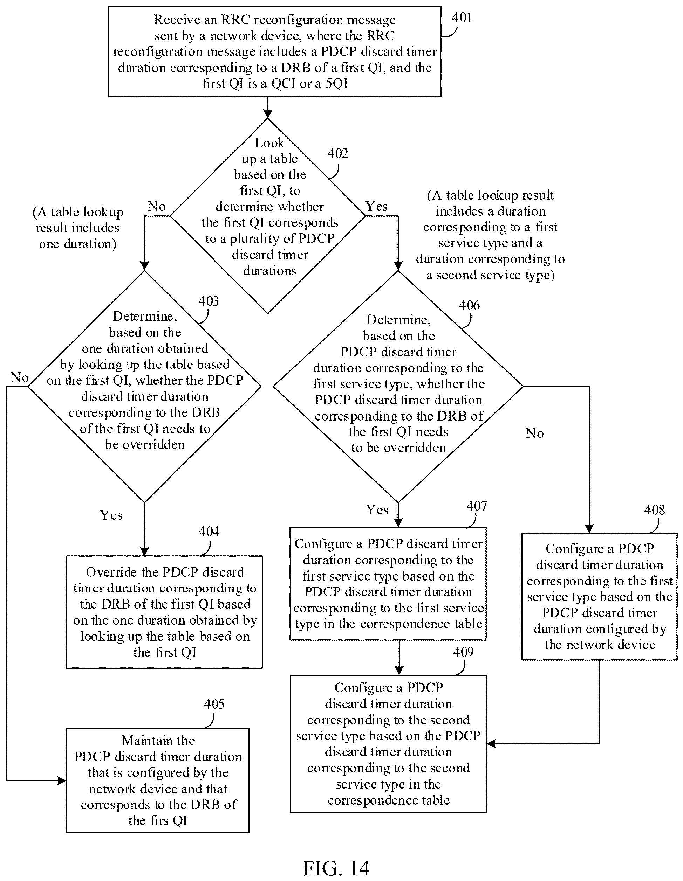

With reference to the descriptions in the foregoing embodiment, if the first QI has only one service type and the service type is not classified into a plurality of use scenarios, the DRB of the first QI corresponds to only one duration; or if the first QI has a plurality of service types or a service type has a plurality of use scenarios, the DRB of the first QI corresponds to a plurality of durations. To more clearly understand this application, based on FIG. 8, FIG. 14 is a schematic flowchart of another method for dynamically adjusting a PDCP discard timer duration.

As shown in FIG. 14, the method may include S401-S409.

S401: A terminal device receives an RRC reconfiguration message sent by a network device, where the RRC reconfiguration message includes a PDCP discard timer duration corresponding to a DRB of a first QI.

The first QI is a QCI or a 5QI.

S402: The terminal device looks up a table based on the first QI, to determine whether the first QI corresponds to a plurality of PDCP discard timer durations.

If the first QI corresponds to one PDCP discard timer duration, S403 is performed.

If the first QI corresponds to a plurality of PDCP discard timer durations (for example, a table lookup result includes a duration corresponding to a first service type and a duration corresponding to a second service type), S406 is performed.

S403: The terminal device determines, based on the one duration obtained by looking up the table based on the first QI, whether the PDCP discard timer duration corresponding to the DRB of the first QI needs to be overridden.

If the PDCP discard timer duration corresponding to the DRB of the first QI needs to be overridden, S404 is performed.

If the PDCP discard timer duration corresponding to the DRB of the first QI does not need to be overridden, S405 is performed.

For a specific implementation of S403, refer to the descriptions of S302. Details are not described herein again.

S404: The terminal device overrides the PDCP discard timer duration corresponding to the DRB of the first QI based on the one duration obtained by looking up the table based on the first QI. That is, the terminal device defines the PDCP discard timer duration corresponding to the DRB of the first QI based on an overridden value.

S405: The terminal device maintains the PDCP discard timer duration that is configured by the network device and that corresponds to the DRB of the first QI. That is, the terminal device sets the PDCP discard timer duration corresponding to the DRB of the first QI based on the configuration from the network device.

S406: The terminal device determines, based on the PDCP discard timer duration corresponding to the first service type, whether the PDCP discard timer duration corresponding to the DRB of the first QI needs to be overridden.

The first service type may be a service type in a plurality of service types of the first QI. The service type is an important service type specified in advance in a correspondence table. For example, for a DRB of QCI=1, a voice frame and a silent frame are included, and the first service type may be the voice frame.

If the PDCP discard timer duration corresponding to the DRB of the first QI needs to be overridden, S407 is performed.

If the PDCP discard timer duration corresponding to the DRB of the first QI does not need to be overridden, S408 is performed.

S407: The terminal device configures a PDCP discard timer duration corresponding to the first service type based on the PDCP discard timer duration corresponding to the first service type in the correspondence table.

S408: The terminal device configures a PDCP discard timer duration corresponding to the first service type based on the PDCP discard timer duration configured by the network device.

S409: The terminal device configures a PDCP discard timer duration corresponding to the second service type based on the PDCP discard timer duration corresponding to the second service type in the correspondence table.

For specific implementations of S406-S409, refer to the descriptions in the foregoing embodiment. Details are not described herein again.

In the foregoing solution for dynamically adjusting a PDCP discard timer duration, when the first QI corresponds to only one duration, the duration may be compared with the duration configured by the network device, to determine whether to override the PDCP discard timer duration corresponding to the DRB of the first QI. When there are a plurality of durations for the first QI, the duration of the first service type may be compared with the duration configured by the network device, to determine whether to override the PDCP discard timer duration corresponding to the first service type. A service type other than the first service type may be directly configured based on a table lookup result. It should be understood that regardless of which of the configuration manners is used, optimization may be performed when a PDCP discard timer duration configured by the network device is improper, to meet requirements of various service types/use scenarios for the PDCP discard timer duration.

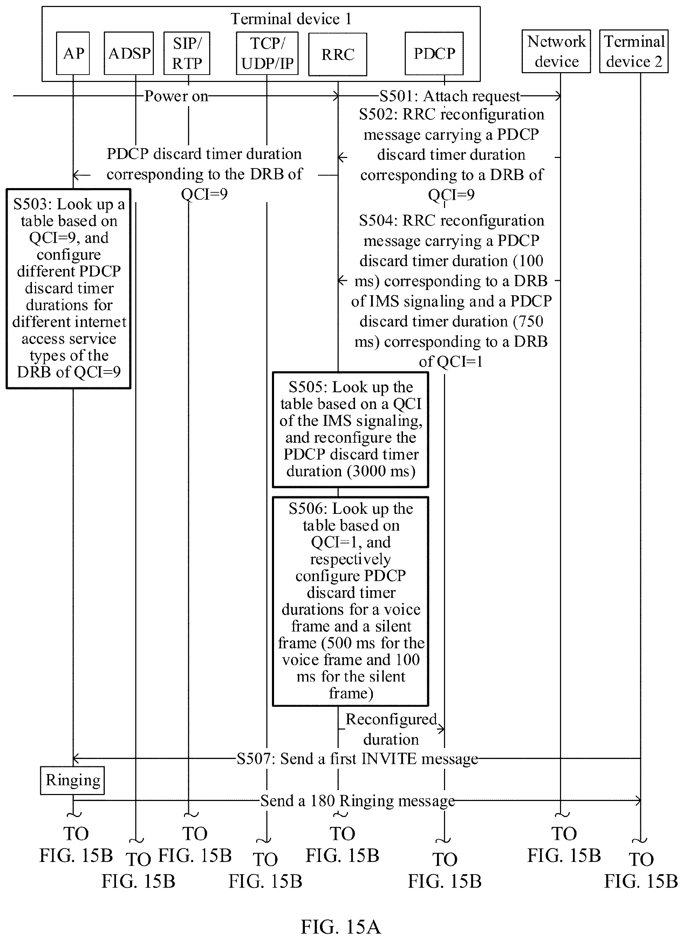

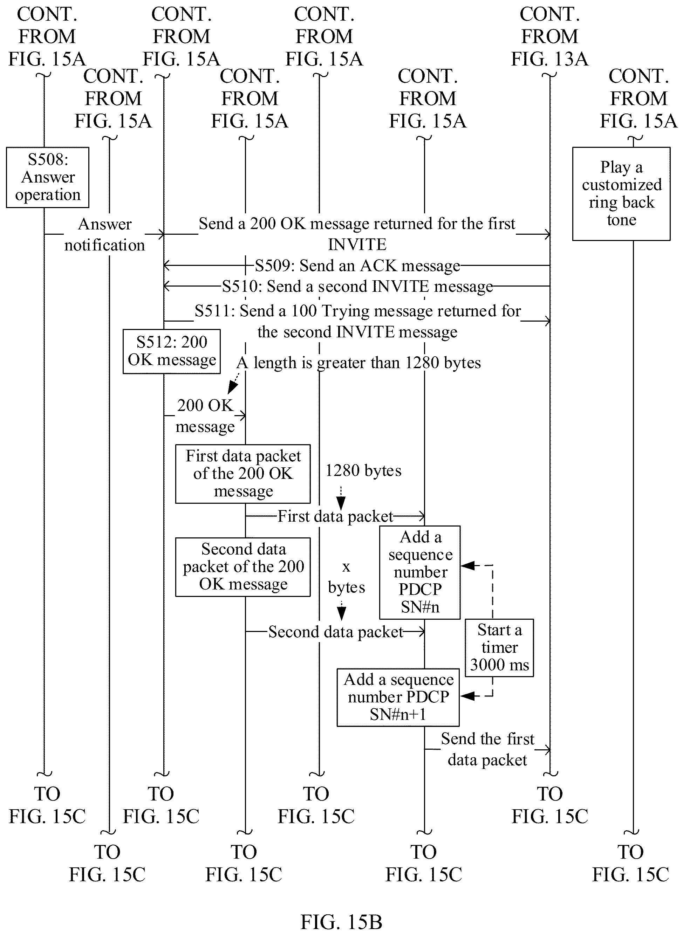

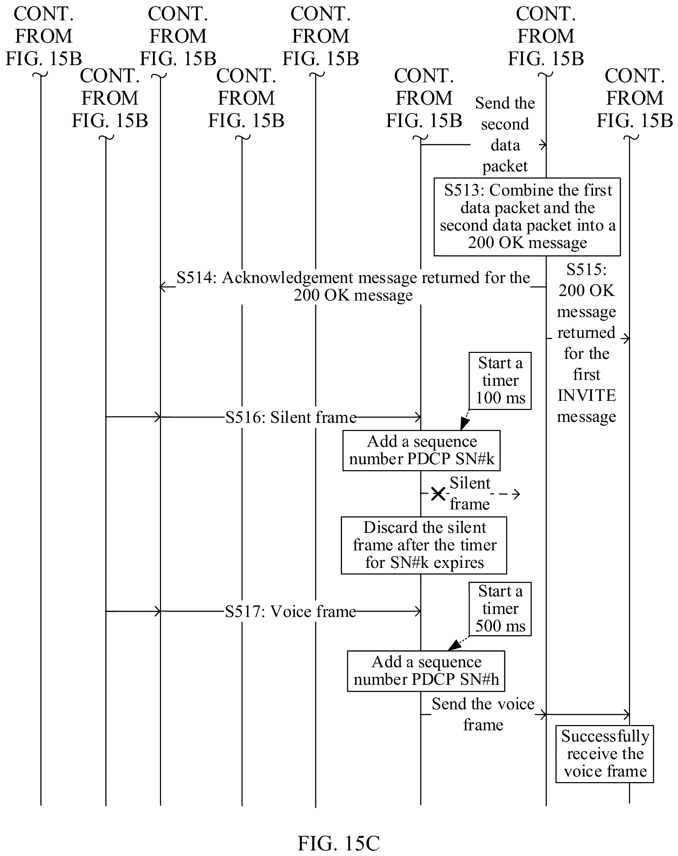

Based on the communication system shown in FIG. 6 and the modules of the terminal device shown in FIG. 7, with reference to FIG. 15A, FIG. 15B, and FIG. 15C, the following describes an example in which a PDCP discard timer duration is adjusted in a VoLTE voice service scenario.

The scenario example may include a network device, a terminal device 1, and a terminal device 2. The network device may be the base station 021 shown in FIG. 6, another network device, or the like, the terminal device 1 is a called device, and the terminal device 2 is a calling device. An AP, a modem processor, and an audio processor (for example, an ADSP) are disposed in the terminal device 1. The modem processor includes a SIP layer, a TCP/UDP/IP layer, an RRC layer, and a PDCP layer. It should be understood that a structure setting of the terminal device 2 is similar to that of the terminal device 1. Details are not described herein again.

Usually, three bearers need to be established for a VoLTE voice service: 1. After the terminal device is powered on, the terminal device selects a to-be-attached network and establishes a first bearer, that is, a default bearer of QCI=9. 2. The VoLTE voice service needs to implement session interaction control by using SIP signaling. Therefore, before the VoLTE voice service is executed, a second bearer, that is, a default bearer of QCI=5, is established to support a user in completing IMS registration and support carrying of the SIP signaling and SMS and MMS transmission. 3. After the default bearer of QCI=9 and the default bearer of QCI=5 are established, a dedicated bearer of QCI=1 is established to transmit voice data. It should be noted that if the video service is a VoLTE video service, a fourth bearer, that is, a dedicated bearer of QCI=2, further needs to be established to transmit video data.

As shown in FIG. 15A, FIG. 15B, and FIG. 15C, the scenario example may include S501-S517.

S501: The terminal device 1 sends an attach request to the network device in response to a power-on operation of the user.

S502: The network device sends an RRC reconfiguration message to the terminal device 1. The RRC reconfiguration message carries a PDCP discard timer duration corresponding to a DRB of QCI=9.

After being powered on, the terminal device 1 first selects an access network (for example, an IMS network), and then performs evolved packet core (evolved packet core, EPC) authentication and registration (that is, network attach). In this process, the network device sends the RRC reconfiguration message that carries the PDCP discard timer duration corresponding to the DRB of QCI=9 to the RRC layer of the terminal device 1. QCI=9 is an LTE default bearer, and the terminal device 1 resides on QCI=9 when camping on the network. Then, the RRC layer of the terminal device 1 reports the PDCP discard timer duration corresponding to the DRB of QCI=9 to the AP of the terminal device 1.

In an example, the RRC layer of the terminal device 1 may actively report the PDCP discard timer duration corresponding to the DRB of QCI=9 to the AP of the terminal device 1. In another example, the AP of the terminal device 1 first sends a query message to the RRC layer of the terminal device 1, and then the RRC layer of the terminal device 1 reports the PDCP discard timer duration corresponding to the DRB of QCI=9 to the AP of the terminal device 1 in response to the query message.

S503: The terminal device 1 looks up a table based on QCI=9, and configures different PDCP discard timer durations for different internet access service types of the DRB of QCI=9.

In the correspondence table, if QCI=9 is classified into only one service type and the service type is classified into no use scenario, the DRB of QCI=9 corresponds to only one PDCP discard timer duration. In this case, the AP of the terminal device 1 compares the one PDCP discard timer duration obtained by looking up the table with the PDCP discard timer duration configured by the network device, and overrides the PDCP discard timer duration corresponding to the DRB of QCI=9 when an override condition is met.

In the correspondence table, if QCI=9 is classified into a plurality of service types or a plurality of use scenarios, the DRB of QCI=9 corresponds to a plurality of PDCP discard timer durations. In this case, the AP of the terminal device 1 compares a PDCP discard timer duration of a first service type/first use scenario obtained by looking up the table with the PDCP discard timer duration configured by the network device, and overrides the PDCP discard timer duration corresponding to the first service type/first use scenario when an override condition is met. In addition, the AP of the terminal device 1 may further configure a PDCP discard timer duration corresponding to another service type/another use scenario of QCI=9 based on a table lookup result based on QCI=9.

For a specific implementation of S503, refer to the descriptions of S401-S409. Details are not described herein again.

S504: When an RRC reconfiguration start condition is met, the network device sends an RRC reconfiguration message to the terminal device 1 again, where the RRC reconfiguration message carries a PDCP discard timer duration (for example, 100 ms) corresponding to a DRB of IMS signaling and a PDCP discard timer duration (for example, 750 ms) corresponding to a DRB of QCI=1.

A QCI of the IMS signaling is equal to 5.

After the terminal device 1 completes attach, when the RRC reconfiguration start condition is met, the network device sends the RRC reconfiguration message to the RRC layer of the terminal device 1 again, where the RRC reconfiguration message carries the PDCP discard timer duration corresponding to the DRB of the IMS signaling and the PDCP discard timer duration corresponding to the DRB of QCI=1. That is, one RRC reconfiguration message may carry PDCP discard timer durations corresponding to DRBs of two QCIs.

In another example, the network device may alternatively include only the PDCP discard timer duration corresponding to the DRB of the IMS signaling or only the PDCP discard timer duration corresponding to the DRB of QCI=1 in the resent RRC reconfiguration message. That is, one RRC reconfiguration message may carry a PDCP discard timer duration corresponding to a DRB of one QCI.

In still another example, the network device may alternatively include the PDCP discard timer duration corresponding to the DRB of the IMS signaling, the PDCP discard timer duration corresponding to the DRB of QCI=1, and the PDCP discard timer duration corresponding to the DRB of QCI=9 in the resent RRC reconfiguration message. That is, one RRC reconfiguration message may carry PDCP discard timer durations corresponding to DRBs of three QCIs.

It should be noted that a specific quantity of QCIs for DRBs whose PDCP discard timer durations are carried in one RRC reconfiguration message is determined by the network device. However, regardless of how the network device makes a configuration, the terminal device 1 may dynamically adjust a PDCP discard timer duration corresponding to a DRB of the QCI, that is, optimize the PDCP discard timer duration.

S505: The terminal device 1 looks up the table based on the QCI (QCI=5) of the IMS signaling, and reconfigures the PDCP discard timer duration (for example, 3000 ms) corresponding to the DRB of QCI=5.

After the RRC layer of the terminal device 1 reconfigures the PDCP discard timer duration for the IMS signaling, the RRC layer of the terminal device 1 may further send the PDCP discard timer duration configured for the IMS signaling to the PDCP layer of the terminal device 1.

S506: The terminal device 1 looks up the table based on QCI=1, and respectively configures PDCP discard timer durations for a voice frame and a silent frame. For example, 500 ms is set for the voice frame, and 100 ms is set for the silent frame.

After the RRC layer of the terminal device 1 respectively configures the PDCP discard timer durations for the voice frame and the silent frame, the RRC layer of the terminal device 1 may further send the PDCP discard timer durations respectively configured for the voice frame and the silent frame to the PDCP layer of the terminal device 1.

It should be noted that a sequence of performing S505 and S506 is not limited in this embodiment of this application. For specific implementations of S505 and S506, refer to the descriptions in the foregoing embodiment. Details are not described herein again.

S507: The terminal device 2 sends a first INVITE message to the terminal device 1 through the network device, in response to the first INVITE message, the terminal device 1 rings and sends a 180 Ringing message to the terminal device 2 through the network device, and the terminal device 2 starts to play a customized ring back tone.

For a specific implementation of S507, refer to the descriptions about S202 in the foregoing embodiment. Details are not described herein again.

S508: The terminal device 1 sends a 200 OK message returned for the first INVITE message to the network device in response to an answer operation of the user.

Specifically, the AP of the terminal device 1 receives the answer operation of the user. The AP of the terminal device 1 delivers an answer notification to the SIP layer of the terminal device 1 in response to the answer operation. The SIP layer of the terminal device 1 sends the 200 OK message returned for the first INVITE message to the network device.

S509: The network device returns an ACK message returned for the 200 OK message to the terminal device.

Specifically, the network device may return the ACK message returned for the 200 OK message to the SIP layer of the terminal device 1.

S510: The network device sends a second INVITE message to the terminal device 1.

Specifically, the network device may send the second INVITE message to the SIP layer of the terminal device 1. The second INVITE message is also referred to as a Reinvite message, and the Reinvite message is a message resent for the first INVITE message. Different from the first INVITE message, the second INVITE message further includes a tag.

S511: The terminal device 1 sends a 100 Trying message returned for the second INVITE message to the network device.

Specifically, the SIP layer of the terminal device 1 sends the 100 Trying message returned for the second INVITE message to the network device.

S512: The terminal device 1 sends a 200 OK message returned for the second INVITE message to the network device, and starts a PDCP discard timer (that is, starts timing). When a timing duration of the PDCP discard timer has not expired, the terminal device 1 successfully sends the 200 OK message to the network device.

Specifically, the SIP layer of the terminal device 1 delivers the 200 OK message to the TCP/UDP/IP layer of the terminal device 1. The TCP/UDP/IP layer of the terminal device 1 determines whether a length of the 200 OK message is greater than or equal to a fragmentation threshold. If the length of the 200 OK message is greater than or equal to the fragmentation threshold, the TCP/UDP/IP layer of the terminal device 1 splits the 200 OK message into two data packets, and sends the two data packets to the PDCP layer of the terminal device 1.

It is assumed that the fragmentation threshold of the 200 OK message for the second INVITE message is 1280 bytes. A length of a first data packet of the 200 OK message for the second INVITE message is 1280 bytes, and a length of a second data packet of the 200 OK message for the second INVITE message is x bytes. That is, the length of the 200 OK message for the second INVITE message is (1280+x) bytes. The PDCP layer of the terminal device 1 first receives the first data packet of the 200 OK message, adds a sequence number PDCP SN#n to the first data packet, and starts a PDCP discard timer 1 (for example, 3000 ms) corresponding to PDCP SN#n; and then receives the second data packet of the 200 OK message, adds a sequence number PDCP SN#n+1 to the second data packet, and starts a PDCP discard timer 2 (for example, 3000 ms) corresponding to PDCP SN#n+1. After the sequence numbers are respectively added to the two data packets, PDCP SN#n and PDCP SN#n+1 wait for network scheduling for sending.

Then, after a resource is scheduled for PDCP SN#n, the PDCP layer of the terminal device 1 sends the first data packet to the network device. In an example, in a case of network congestion, the first data packet is fragmented into dozens or even hundreds of data packets and sequentially sent. Compared with that in S201-S211, the duration of the PDCP discard timer 1 is extended from 100 ms to 3000 ms, so that PDCP SN#n can be successfully sent to the network device within the 3000 ms.

After PDCP SN#n is successfully sent, a resource is scheduled for PDCP SN#n+1, and the PDCP layer of the terminal device 1 starts to send the second data packet to the network device. Compared with that in S201-S220, the duration of the PDCP discard timer 2 is extended from 100 ms to 3000 ms. After PDCP SN#n is successfully sent, sufficient time is reserved for PDCP SN#n+1. Therefore, PDCP SN#n+1 can also be successfully sent to the terminal device 2 within the 3000 ms.

It should be noted that in FIG. 15A, FIG. 15B, and FIG. 15C, an example in which the PDCP layer of the terminal device 1 sends the data packet to the network device is used for description. In actual implementation, PDCP SN#n/PDCP SN#n+1 first arrives at the base station, the base station obtains raw data of the first data packet/second data packet through parsing, and then the base station sends the first data packet/second data packet to a remote device in a wired transmission manner. The first data packet/second data packet has no SN.

S513: The network device successfully receives the first data packet and the second data packet, and combines the first data packet and the second data packet into a 200 OK message.

For example, the network device starts a timer after receiving the first data packet. After the PDCP discard timer of the terminal device 1 is extended to 3000 ms, the terminal device 1 may send the second data packet to the network device before the PDCP discard timer expires. Correspondingly, before the timer of the network device expires, the network device may receive the first data packet and the second data packet, and combine the first data packet and the second data packet into a complete 200 OK message.

S514: The network device sends an acknowledgement message returned for the 200 OK message to the terminal device 1.

Specifically, the network device sends the acknowledgement message returned for the 200 OK message to the RRC layer of the terminal device 1.

S515: The network device sends a 200 OK message returned for the first INVITE message to the terminal device 2.

In this case, the terminal device 1 and the terminal device 2 have established the default bearer of QCI=5. The bearer supports the user in completing IMS registration and supports carrying of the SIP signaling and SMS and MMS transmission. It should be understood that compared with that in S201-S211, the terminal device 1 reconfigures the PDCP discard timer duration corresponding to the DRB of QCI=5 in S505, so that the PDCP discard timer duration is extended from 100 ms to 3000 ms, to reserve sufficient time for the first data packet and the second data packet. Therefore, the second data packet can be successfully sent to the network device within the 3000 ms.

After the default bearer of QCI=5 is established, the terminal device 1 and the terminal device 2 may further establish the dedicated bearer of QCI=1 to transmit voice data. In this embodiment of this application, for the DRB of QCI=1, different values are set for different frame types. For example, on the DRB of QCI=1, 500 ms is set for the voice frame, and 100 ms is set for the silent frame.

S516: The terminal device 1 obtains the silent frame, sends the silent frame to the network device, and starts a PDCP discard timer (that is, starts timing). After the PDCP discard timer expires, the terminal device 1 discards the silent frame, and stops the PDCP discard timer (that is, stops timing).

Specifically, the ADSP of the terminal device 1 sends the silent frame to the PDCP layer through an RTP layer. The PDCP layer of the terminal device 1 receives the silent frame, adds a sequence number PDCP SN#k to the silent frame, and starts a PDCP discard timer 3 (for example, 100 ms) corresponding to PDCP SN#k. PDCP SN#k waits for network scheduling for sending. If PDCP SN#k is not sent within the 100 ms, the PDCP layer of the terminal device 1 discards the silent frame.

It should be noted that in S516, an example in which the silent frame is discarded in a case of expiration is used for description. This application further provides another scenario example: The terminal device 1 obtains the silent frame, sends the silent frame to the network device, and starts a PDCP discard timer (that is, starts timing), and when a timing duration of the PDCP discard timer has not expired, the terminal device 1 successfully sends the silent frame to the network device.

S517: The terminal device 1 obtains the voice frame, sends the voice frame to the network device, and starts a PDCP discard timer (that is, starts timing). When a timing duration of the PDCP discard timer has not expired, the terminal device 1 successfully sends the voice frame to the network device.

Specifically, the ADSP of the terminal device 1 sends the voice frame to the PDCP layer through the RTP layer. The PDCP layer of the terminal device 1 receives the voice frame, adds a sequence number PDCP SN#h to the voice frame, and starts a PDCP discard timer 4 (for example, 500 ms) corresponding to PDCP SN#h. PDCP SN#h waits for network scheduling for sending. After a resource is scheduled for PDCP SN#h, the PDCP layer of the terminal device 1 sends the voice frame to the network device. Then, the network device forwards the voice frame to the terminal device 2. Correspondingly, the terminal device 2 successfully receives the voice frame.

It should be noted that in S517, an example in which the voice frame is successfully sent is used for description. This application further provides another scenario example: The terminal device 1 obtains the voice frame, sends the voice frame to the network device, and starts a PDCP discard timer (that is, starts timing), and after the PDCP discard timer expires, the terminal device 1 discards the voice frame, and stops the PDCP discard timer (that is, stops timing).

In the foregoing solution for dynamically adjusting a PDCP discard timer duration, different values are set for the voice frame and the silent frame for the DRB of QCI=1. For example, 500 ms is set for the voice frame, and 100 ms is set for the silent frame. On one hand, for voice data, an excessively high delay is meaningless. Therefore, compared with that of the IMS signaling, the PDCP discard timer durations of the voice frame and the silent frame are set to be shorter. On the other hand, compared with the voice frame, the silent frame carries less useful information, and therefore the PDCP discard timer duration of the silent frame is set to be shorter. Therefore, when the silent frame expires, the silent frame is discarded in a timely manner, to release a channel resource, so that the voice frame located after the silent frame can be smoothly transmitted.

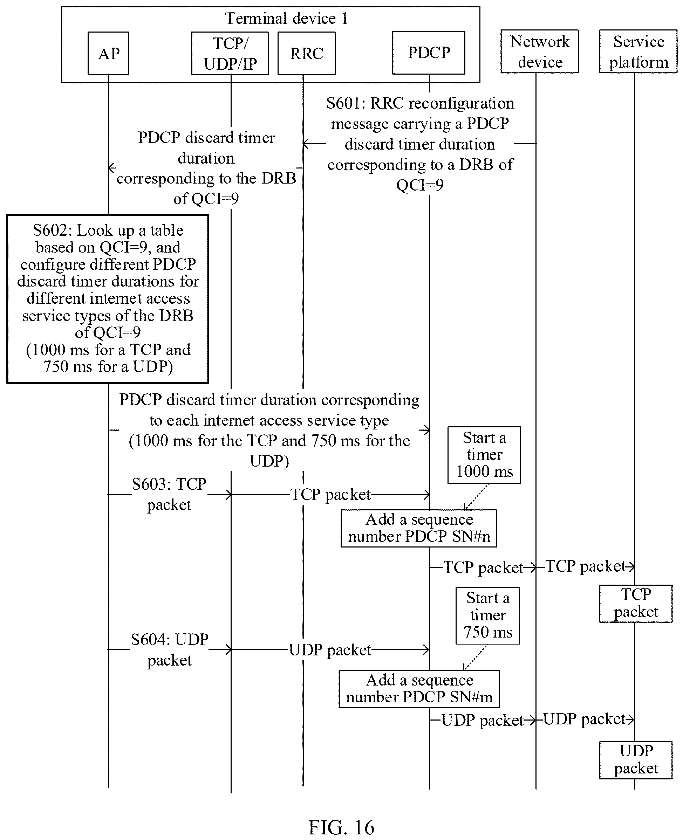

Based on the communication system shown in FIG. 6 and the modules of the terminal device shown in FIG. 7, with reference to FIG. 16, the following describes an example in which a PDCP discard timer duration is adjusted in an internet access scenario.

The scenario example may include a network device, a terminal device 1, and a service platform. The network device may be the base station 021 shown in FIG. 6, another network device, or the like, the terminal device 1 is a mobile phone, a personal computer (PC), a tablet, or the like used by a user, and the service platform is a game platform, a shopping platform, or the like. An AP and a modem processor are disposed in the terminal device 1. The modem processor includes a TCP/UDP/IP layer, an RRC layer, a PDCP layer, and the like.

Usually, a bearer of QCI=6, 7, 8, or 9 needs to be established for an internet access service. QCI=9 is used as an example. As shown in FIG. 16, the scenario example may include S601-S604.

S601: The network device sends an RRC reconfiguration message to the terminal device 1.

When an RRC reconfiguration start condition is met, the network device sends an RRC reconfiguration message to the RRC layer of the terminal device 1, where the RRC reconfiguration message carries a PDCP discard timer duration corresponding to a DRB of QCI=9. The RRC layer of the terminal device 1 reports the PDCP discard timer duration corresponding to the DRB of QCI=9 to the AP of the terminal device 1.

In an example, the RRC layer of the terminal device 1 may actively report the PDCP discard timer duration corresponding to the DRB of QCI=9 to the AP of the terminal device 1. In another example, the AP of the terminal device 1 first sends a query message to the RRC layer of the terminal device 1, and then the RRC layer of the terminal device 1 reports the PDCP discard timer duration corresponding to the DRB of QCI=9 to the AP of the terminal device 1 in response to the message.

S602: The AP of the terminal device 1 looks up a table based on QCI=9, and configures different PDCP discard timer durations for different internet access service types of the DRB of QCI=9.

It is assumed that in the correspondence table, QCI=9 is classified into two service types: a TCP and a UDP. A PDCP discard timer duration of the TCP is set to 1000 ms, and a PDCP discard timer duration of the UDP is set to 750 ms. The AP of the terminal device 1 sends a PDCP discard timer duration corresponding to each internet access service type to the PDCP layer of the terminal device 1. Correspondingly, the PDCP layer of the terminal device 1 stores the PDCP discard timer duration corresponding to each internet access service type.

For a specific implementation of S602, refer to the descriptions of S401-S409. Details are not described herein again.

S603: The terminal device 1 obtains a TCP packet, sends the TCP packet to the network device, and starts a PDCP discard timer (that is, starts timing). When a timing duration of the PDCP discard timer has not expired, the terminal device 1 successfully sends the TCP packet to the network device. The PDCP discard timer duration is 1000 ms.

The AP of the terminal device 1 sends the TCP packet to the PDCP layer through the TCP/UDP/IP layer. The PDCP layer of the terminal device 1 receives the TCP packet, adds a sequence number PDCP SN#n to the TCP packet, and starts a PDCP discard timer 1 (for example, 1000 ms) corresponding to PDCP SN#n. PDCP SN#n waits for network scheduling for sending. After a resource is scheduled for PDCP SN#n, the PDCP layer of the terminal device 1 sends the TCP packet to the network device. Then, the network device forwards the TCP packet to the service platform.

S604: The terminal device 1 obtains a UDP packet, sends the UDP packet to the network device, and starts a PDCP discard timer (that is, starts timing). When a timing duration of the PDCP discard timer has not expired, the terminal device 1 successfully sends the UDP packet to the network device. The PDCP discard timer duration is 750 ms.

The AP of the terminal device 1 sends the UDP packet to the PDCP layer through the UDP/IP layer. The PDCP layer of the terminal device 1 receives the UDP packet, adds a sequence number PDCP SN#m to the UDP packet, and starts a PDCP discard timer 2 (for example, 750 ms) corresponding to PDCP SN#m. PDCP SN#m waits for network scheduling for sending. After a resource is scheduled for PDCP SN#m, the PDCP layer of the terminal device 1 sends the UDP packet to the network device. Then, the network device forwards the UDP packet to the service platform.

In the foregoing solution for dynamically adjusting a PDCP discard timer duration, for the DRB of QCI=9, the UDP requires a relatively low delay. Therefore, the PDCP discard timer duration corresponding to the UDP may be set to be relatively short, and the PDCP discard timer duration corresponding to the TCP may be set to be relatively long, to meet requirements of different service types/different use scenarios of a same QCI for the PDCP discard timer duration, thereby effectively improving experience of using the terminal device by the user.

It should be noted that in all the foregoing embodiments, an example in which the terminal device looks up the table based on the QCI/5QI and dynamically adjusts the PDCP discard timer duration is used for description, and constitutes no limitation on this application. In actual implementation, the network device may alternatively look up the table based on the QCI/5QI and reconfigure the PDCP discard timer duration. For example, the network device configures different PDCP discard timer durations for DRBs of different QCIs/5QIs; the network device configures different PDCP discard timer durations for different service types of a same DRB; and the network device configures different PDCP discard timer durations for different use scenarios of a same service type. It should be understood that the network device dynamically adjusts the PDCP discard timer duration, to effectively meet requirements of various service types/use scenarios. For a specific implementation in which the network device looks up the table based on the QCI/5QI and dynamically adjusts the PDCP discard timer duration, refer to the related descriptions in the foregoing embodiment. Details are not described herein again.

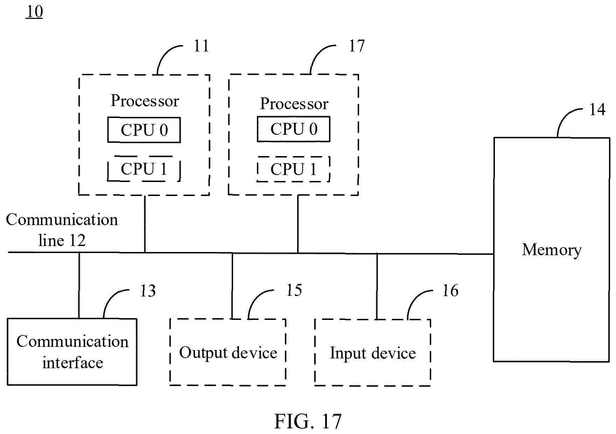

FIG. 17 is a schematic diagram of a hardware structure of a communication apparatus according to an embodiment of this application. As shown in FIG. 17, the communication apparatus 10 includes at least one processor 11, a communication line 12, and at least one communication interface 13. Further, the communication apparatus 10 may further include a memory 14. The processor 11, the memory 14, and the communication interface 13 may be connected to each other through the communication line 12. In this embodiment of this application, at least one may be one, two, three, or more. This is not limited in this embodiment of this application.

The processor 11 may be an AP, a modem processor, a central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor may be any other apparatus with a processing function, such as a circuit, a device, or a software module.

The communication line 12 may include a path for transmitting information between the components included in the communication apparatus.

The communication interface 13 may be configured to communicate with another device or a communication network (for example, an Ethernet, a radio access network (radio access network, RAN), or a wireless local area network (wireless local area networks, WLAN)). The communication interface 13 may be a module, a circuit, a transceiver, or any apparatus that can implement communication.

The memory 14 may be a read-only memory (read-only memory, ROM) or another type of static storage device that can store static information and/or instructions, a random access memory (random access memory, RAM) or another type of dynamic storage device that can store information and/or instructions, an electrically erasable programmable read-only memory (electrically erasable programmable read-only memory, EEPROM), a compact disc read-only memory (compact disc read-only memory, CD-ROM) or another optical disc memory, a compact disc memory (including a compact disc, a laser disc, an optical disc, a digital versatile disc, a Blu-ray disc, and the like), a magnetic disk storage medium or another magnetic storage device, or any other medium that can be used to carry or store desired program code in a form of instructions or data structures and that can be accessed by a computer.

In a possible design, the memory 14 may exist independently of the processor 11, that is, the memory 14 may be an external memory of the processor 11. In this case, the memory 14 may be connected to the processor 11 through the communication line 12 and configured to store instructions or program code. When the processor 11 invokes and executes the instructions or the program code stored in the memory 14, the data transmission method provided in the following embodiments of this application can be implemented. In another possible design, the memory 14 may alternatively be integrated with the processor 11, that is, the memory 14 may be an internal memory of the processor 11. For example, the memory 14 is a cache and may be configured to temporarily store some data, instruction information, and/or the like.

In a possible implementation, the processor 11 may include one or more CPUs, such as a CPU 0 and a CPU 1 in FIG. 17. In another possible implementation, the communication apparatus 10 may include a plurality of processors, such as the processor 11 and a processor 11 in FIG. 17. In still another possible implementation, the communication apparatus 10 may further include an output device 15 and an input device 16. For example, the input device 16 may be a device such as a keyboard, a mouse, a microphone, or a joystick, and the output device 15 may be a device such as a display or a speaker (speaker).

It should be noted that the communication apparatus 10 may be a general-purpose device or a dedicated device. For example, the communication apparatus 10 may be a desktop computer, a portable computer, a network server, a mobile phone, a tablet computer, a wireless terminal, an embedded device, a chip system, or a device with a similar structure in FIG. 17. A type of the communication apparatus 10 is not limited in this embodiment of this application.

An embodiment of this application further provides a computer-readable storage medium. The computer-readable storage medium stores computer instructions. When the computer-readable storage medium runs on a computer, the computer is enabled to perform the method shown above. The computer instructions may be stored in a computer-readable storage medium or transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) manner or a wireless (for example, infrared, radio, or microwave) manner. The computer-readable storage medium may be any usable medium that can be accessed by a computer, or a data storage device, for example, a server or a data center, integrating one or more usable media. The available medium may be a magnetic medium (for example, a floppy disk, a hard disk, or a magnetic tape), an optical medium, a semiconductor medium (for example, a solid state disk (solid state disk, SSD)), or the like.

An embodiment of this application further provides a computer program product. The computer program product includes computer program code, and when the computer program code is run on a computer, the computer is enabled to perform the method in the foregoing embodiments.

An embodiment of this application further provides a chip. The chip is coupled to a memory. The chip is configured to read and execute a computer program or instructions stored in the memory, to perform the method in the foregoing embodiments. The chip may be a general-purpose processor or may be a dedicated processor. It should be noted that the chip may be implemented by using the following circuits or devices: one or more field programmable gate arrays (field programmable gate array, FPGA), a programmable logic device (programmable logic device, PLD), a controller, a state machine, gate logic, a discrete hardware component, any other suitable circuit, or any combination of circuits that can perform various functions described in the full text of this application.

The terminal device, the computer-readable storage medium, the computer program product, and the chip provided in the embodiments of this application are all configured to perform the method provided above. Therefore, for beneficial effects that can be achieved by the terminal device, the computer-readable storage medium, the computer program product, and the chip, refer to the beneficial effects corresponding to the method provided above. Details are not described herein again.

Through the descriptions of the foregoing implementations, a person skilled in the art may clearly understand that for the purpose of convenient and brief description, only division into the foregoing functional modules is used as an example for description. In actual application, the functions may be allocated to and completed by different functional modules based on a requirement. In other words, an internal structure of the apparatus is divided into different functional modules, to complete all or some of the functions described above.

In the several embodiments provided in this application, it should be understood that the disclosed apparatus and method may be implemented in another manner. For example, the described apparatus embodiment is merely an example. For example, the division into the modules or units is merely logical function division, and there may be another division manner in actual implementation. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in an electrical form, a mechanical form, or another form.

The units described as separate parts may or may not be physically separate, and parts displayed as units may be one or more physical units, may be located in one place, or may be distributed in a plurality of different places. Some or all of the units may be selected based on actual requirements to achieve the objectives of the solutions in the embodiments.

In addition, the functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions in the embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods in the embodiments of this application. The storage medium includes various media that can store program code, for example, a USB flash drive, a removable hard disk, a read-only memory (read only memory, ROM), a random access memory (random access memory, RAM), a magnetic disk, or an optical disc.

The foregoing content is merely specific implementations of this application, but is not intended to limit the protection scope of this application. Any variation or replacement made within the technical scope disclosed in this application shall fall within the protection scope of this application. Therefore, the protection scope of this application shall be subject to the protection scope of the claims

## Claims

1. A data transmission method, wherein the method is applied to a first terminal device, and the method comprises:
receiving a radio resource control RRC message sent by a network device, wherein the RRC message comprises first duration information, and the first duration information comprises information that a packet data convergence protocol PDCP discard timer duration corresponding to a first data radio bearer is a first duration;
obtaining a first data frame corresponding to the first data radio bearer; not sending the first data frame to the second terminal device within a second duration starting from obtaining of the first data frame; and not sending the first data frame to the second terminal device after the second duration starting from obtaining of the first data frame, wherein the second duration is different from the first duration; and
obtaining a second data frame corresponding to the first data radio bearer; and sending the second data frame to the second terminal device within the second duration starting from obtaining of the second data frame.

2. The method according to claim 1, wherein the not sending the first data frame to the second terminal device after the second duration starting from obtaining of the first data frame comprises:
performing timing starting from obtaining of the first data frame; and
not sending the first data frame to the second terminal device based on a timing duration reaching the second duration, and stopping timing.

3. The method according to claim 1, wherein the sending the second data frame to the second terminal device within the second duration starting from obtaining of the second data frame comprises:
performing timing starting from obtaining of the second data frame; and
sending the second data frame to the second terminal device within the second duration, and stopping timing.

4. The method according to any one of claims 1 to 3, wherein the first data frame and the second data frame carry a first identifier; and
after the receiving the RRC message sent by the network device, the method further comprises:
obtaining a third data frame corresponding to the first data radio bearer; not sending the third data frame to the second terminal device within a third duration starting from obtaining of the third data frame; and not sending the third data frame to the second terminal device after the third duration starting from obtaining of the third data frame, wherein the third duration is different from the first duration; and
obtaining a fourth data frame corresponding to the first data radio bearer; and sending the fourth data frame to the second terminal device within the third duration starting from obtaining of the fourth data frame, wherein
the first data frame and the fourth data frame carry a second identifier, and the first identifier and the second identifier indicate different types of data frames.

5. The method according to claim 4, wherein the not sending the third data frame to the second terminal device after the third duration starting from obtaining of the third data frame comprises:
performing timing starting from obtaining of the third data frame; and
not sending the third data frame to the second terminal device based on a timing duration reaching the third duration, and stopping timing.

6. The method according to claim 4, wherein the sending the fourth data frame to the second terminal device within the third duration starting from obtaining of the fourth data frame comprises:
performing timing starting from obtaining of the fourth data frame; and
sending the fourth data frame to the second terminal device within the second duration, and stopping timing.

7. The method according to any one of claims 4 to 6, wherein the first data radio bearer is a voice data radio bearer, the first identifier is used to indicate a voice frame, and the second identifier is used to indicate a silent frame; and the second duration is greater than the first duration, and the third duration is less than the first duration.

8. The method according to claim 7, wherein after the receiving the RRC message sent by the network device, the method further comprises:
looking up a preset relationship table to obtain the third duration corresponding to the silent frame of the voice data radio bearer and the second duration corresponding to the voice frame of the voice data radio bearer;
determining that the second duration is greater than the first duration; and
configuring the third duration as a PDCP discard timer duration corresponding to the silent frame of the voice data radio bearer, and configuring the second duration as a PDCP discard timer duration corresponding to the voice frame of the voice data radio bearer.

9. The method according to claim 7, wherein after the receiving the RRC message sent by the network device, and before the obtaining a voice frame and a silent frame, the method further comprises:
receiving a first INVITE message sent by the second terminal device; and
receiving an answer operation of a user.

10. The method according to claim 9, wherein the first duration information further comprises information that a PDCP discard timer duration corresponding to an IMS data radio bearer is a fourth duration; and
after the receiving the answer operation of a user, and before the obtaining a voice frame and a silent frame, the method further comprises:
receiving a second INVITE message sent by the network device;
obtaining a 200 OK message returned for the second INVITE message;
not sending the 200 OK message within the fourth duration starting from obtaining of the 200 OK message; and
sending the 200 OK message to the network device within a fifth duration starting from obtaining of the 200 OK message, wherein the fifth duration is greater than the fourth duration.

11. The method according to claim 10, wherein after the receiving the RRC message sent by the network device, and before the receiving the first INVITE message, the method further comprises:
looking up a preset relationship table to obtain the fifth duration corresponding to the IMS data radio bearer;
determining that the fifth duration is greater than the fourth duration; and
configuring the fifth duration as a PDCP discard timer duration corresponding to the IMS data radio bearer.

12. The method according to any one of claims 4 to 6, wherein the first data radio bearer is an internet access data radio bearer, the first identifier is used to indicate a TCP frame, and the second identifier is used to indicate a UDP frame; and the second duration is greater than the third duration.

13. The method according to claim 12, wherein after the receiving the RRC message sent by the network device, the method further comprises:
looking up a preset relationship table to obtain the second duration corresponding to the TCP frame of the internet access data radio bearer and the third duration corresponding to the UDP frame of the internet access data radio bearer; and
determining that the second duration is less than the first duration, configuring the second duration as a PDCP discard timer duration corresponding to the TCP frame of the internet access data radio bearer, and configuring the third duration as a PDCP discard timer duration corresponding to the UDP frame of the internet access data radio bearer; or
determining that the second duration is greater than or equal to the first duration, configuring the second duration as a PDCP discard timer duration corresponding to the TCP frame of the internet access data radio bearer, and configuring the third duration as a PDCP discard timer duration corresponding to the UDP frame of the internet access data radio bearer; or
determining that the second duration is not equal to the first duration, configuring the second duration as a PDCP discard timer duration corresponding to the TCP frame of the internet access data radio bearer, and configuring the third duration as a PDCP discard timer duration corresponding to the UDP frame of the internet access data radio bearer.

14. The method according to any one of claims 1 to 13, wherein the first data radio bearer is a data radio bearer of a first quality of service class identifier QCI, or the first data radio bearer is a data radio bearer of a first 5G quality of service identifier 5QI.

15. A terminal device, wherein the terminal device comprises a processor and a memory coupled to the processor, the memory stores instructions, and when the processor executes the instructions, the terminal device is enabled to perform the data transmission method according to any one of claims 1 to 14.

16. A computer-readable storage medium, wherein the computer-readable storage medium stores a computer program, and when the computer program is run on a terminal device, the terminal device is enabled to perform the data transmission method according to any one of claims 1 to 14.
